# EUROPÄISCHE PATENTSCHRIFT

(11) **EP 4 229 116 B1**
(45) Veröffentlichungstag und Bekanntmachung des Hinweises auf die Patenterteilung: **26.08.2026**
(21) Anmeldenummer: 20792379.8
(22) Anmeldetag: 13.10.2020
(51) Int. Cl.: C08G 77/46, C08L 83/12, D06M 15/647, C08G 65/332

(54) **WÄSSRIGE DISPERSIONEN VON MIT OXALATOPOLYETHERN VORVERNETZTEN AMINO-FUNKTIONALISIERTEN ORGANOPOLYSILOXANEN**
AQUEOUS DISPERSIONS OF AMINO-FUNCTIONALIZED ORGANOPOLYSILOXANES PRE-CROSSLINKED WITH OXALATOPOLYETHERS
DISPERSIONS AQUEUSES D'ORGANOPOLYSILOXANES AMINOFONCTIONNALISÉS PRÉRÉTICULÉS AVEC DES OXALATOPOLYÉTHERS

(43) Veröffentlichungstag der Anmeldung: 23.08.2023
(73) Patentinhaber: Wacker Chemie AG, 81671 München (DE)
(72) Erfinder: BREHM, Christof, 84489 Burghausen (DE); SELBERTINGER, Ernst, 84489 Burghausen (DE); ZIRZLMEIER, Johannes, 84489 Burghausen (DE)
(86) Internationale Anmeldenummer: PCT/EP2020/078803
(87) Internationale Veröffentlichungsnummer: WO 2022/078580

(56) Entgegenhaltungen:
- WO-A1-2019/114953
- US-A1- 2008 318 058
- US-B2- 8 637 614
- NAOAKI FUKADA1) ET AL: "Synthesis of Macrocyclic Amides and Their Intermediate 2 : 1 and 3 : 2 Reaction Compounds from Diethyl Oxalate and Ethereal Oxygen-Containing Diamines", BULLETIN OF THE CHEMICAL SOCIETY OF JAPAN, CHEMICAL SOCIETY OF JAPAN,NIPPON KAGAKUKAI, JP, vol. 69, no. 5, 1 January 1996 (1996-01-01), pages 1397 - 1401, XP009138015, ISSN: 0009-2673, DOI: 10.1246/BCSJ.69.1397

## Beschreibung

Die Erfindung betrifft wässrige Dispersionen von vorvernetzten Organopolysiloxanen, deren Herstellung und deren Verwendung in Zusammensetzungen zur Behandlung von Substraten, vorzugsweise faserigen Substraten.

Organopolysiloxane werden in vielen sogenannten "Consumer Products" eingesetzt, um einen bestimmten Nutzen zu erzielen. Beispiele sind eine besondere Weichheit oder Glätte, eine verbesserte Haptik, die Reduktion von Falten, Beeinflussung von Glanzeigenschaften, Verbesserung von Farbeindrücken, Farbschutzeigenschaften, Verringerung der elektrostatischen Aufladungen oder Schutzeigenschaften bei thermischer Belastung von Fasern oder Haaren.

Der Einsatz von Organopolysiloxanen insbesondere Aminofunktionalisierter Organopolysiloxanen in der Textilausrüstung ist seit langem Stand der Technik, wie beispielsweise in H. J. Lautenschlager, Textil Praxis International, Volume 47, 5, 1992, S. 460-461 berichtet.

Über den Einsatz von Organopolysiloxanen insbesondere Aminofunktionalisierter Organopolysiloxanen in Produkten zur Textilpflege berichten R. Becker in SOFW-Journal, Volume 139, 9, S. 36-38. Bei diesen Amino-funktionalisierten Organopolysiloxanen handelt es sich um unvernetzte Produkte.

Gemäß US 2008/0064813 A1 werden wässrige Dispersionen von vorvernetzten Organopolysiloxanen ohne Mitverwendung von metallhaltigen Katalysatoren erhalten durch Umsetzung von Alkoxy- oder Hydroxygruppen aufweisenden Amino-funktionellen Organopolysiloxane mit reaktiven Alkoxysilanen. Nach Auftragen der Dispersionen auf Substraten und Verdampfen des Wassers werden elastomere Filme erhalten. Dieser elastische Effekt kann auch zur Reduktion von Knittern von Textilien genutzt werden.

Der Nachteil von derartigen ausschließlich Amino-funktionalisierten vorvernetzten Organopolysiloxanen ist ihr hydrophober Effekt auf die Textilien.

Hydrophil-modifizierte Siloxane sind bekannt. Gemäß WO 2019/114953 A1 handelt es sich dabei um lineare CoPolymere von Oxalamidoester-terminierten Organopolysiloxanen mit Amino-terminierten Polyethern. Diese zeigen eine deutlich gesteigerte Hydrophilie gegenüber ausschließlich Amino-funktionalisierten Organopolysiloxanen. Aufgrund ihrer linearen Struktur weisen sie aber keinen elastischen Effekt auf.

In US 7,501,184 sind Copolymere beschrieben, die durch Umsetzung von linearen Organopolysiloxanen, die mit Oxalamidestergruppen terminiert sind, mit organischen Diaminen erhalten werden. Es werden hochviskose bis feste Copolymere erhalten, die in Klebstoffen, insbesondere als Heißschmelzkleber, eingesetzt werden. Diese hochviskosen Produkte sind nicht stabil emulgierbar und können daher nicht für die Behandlung von faserigen Substraten, wie Textilien eingesetzt werden. Weiterhin weisen sie aufgrund ihrer linearen Struktur keinen elastischen Effekt auf.

US 8,637,614 B2 und US 2008/0318058 A1 offenbaren ein Verfahren zur Herstellung von Oxalamidoester-terminierten Polyethern, indem Amino-terminierte Polyether mit Oxaldiester wie Diethyloxalat im Überschuss umgesetzt werden.

Es bestand die Aufgabe, vorvernetze Organopolysiloxane, insbesondere wässrige Dispersionen von vorvernetzten Organopolysiloxanen, bereitzustellen, die die oben genannten Nachteile nicht aufweisen, die kostengünstig herstellbar sind, die vorzugsweise nach Entfernen des Wassers einen elastomeren Film bilden und die in Zusammensetzungen zur Behandlung von Substraten, vorzugsweise faserigen Substraten, insbesondere Textilien, eingesetzt werden können. Weiterhin bestand die Aufgabe Zusammensetzungen zur Behandlung von Substraten, vorzugsweise faserigen Substraten, insbesondere Textilien, zu deren Reinigung und Pflege, bereitzustellen, um ihnen verbesserte Eigenschaften, wie beispielsweise gute Hydrophilie-Eigenschaften, zu verleihen. Die Aufgabe wird durch die Erfindung gelöst.

Gegenstand der Erfindung sind wässrige Dispersionen, vorzugsweise wässrige Emulsionen, enthaltend
(1) vorvernetzte Organopolysiloxane,
   die Einheiten der Formel

      R₂SiO_{2/2} (I),
   und durchschnittlich mindestens eine Struktureinheit, vorzugsweise mindestens zwei Struktureinheiten, der Formel

      SiR¹O_{2/2}-Y-SiR¹O_{2/2} (III)
   enthalten, wobei
      - Y: einen zweiwertigen Rest der Formel

      -R²-[NR³⁻R⁴⁻]ₙ-NR³-C(O)-C(O)NR³-Z-NR³⁻C(O)-C(O)-NR³-[R⁴-NR³]ₙ-R²-

      bedeutet,
      - Z: gleich oder verschieden ist und einen zweiwertigen eine Polyoxyalkylengruppe enthaltenden organischen Rest, vorzugsweise einen Rest der Formel -(R⁵O)ₘ-R⁶-, bedeutet,
      - R: gleich oder verschieden sein kann, einen einwertigen, unsubstituierten oder substituierten, gesättigten oder ungesättigten Kohlenwasserstoffrest mit 1 bis 18 Kohlenstoffatomen bedeutet,
      - R¹: gleich oder verschieden sein kann und einen Rest R oder einen Rest -O-R⁷ bedeutet,
      - R²: einen SiC-gebundenen, zweiwertigen linearen oder verzweigten Kohlenwasserstoffrest mit 1 bis 18 Kohlenstoffatomen, vorzugsweise einen Alkylenrest mit 3 bis 10 Kohlenstoffatomen, bedeutet,
      - R³: ein Wasserstoffatom, einen Alkylrest mit 1 bis 8 Kohlenstoffatomen oder einen Acylrest, wie Acetylrest, bedeutet, vorzugsweise ein Wasserstoffatom ist,
      - R⁴: einen zweiwertigen Kohlenwasserstoffrest mit 1 bis 6 Kohlenstoffatomen, vorzugsweise einen Alkylenrest mit 1 bis 6 Kohlenstoffatomen, bedeutet,
      - R⁵: gleich oder unterschiedlich ist und einen C₁-C₁₀-Alkylenrest, vorzugsweise einen C₂-C₃-Alkylenrest, bevorzugt einen Ethylen- oder iso-Propylenrest bedeutet, und
      - R⁶: einen C₁-C₁₀-Alkylenrest, vorzugsweise einen C₂-C₃-Alkylenrest, bevorzugt einen Ethylen- oder iso-Propylenrest bedeutet,
      - R⁷: gleich oder verschieden sein kann, Wasserstoff oder einen einwertigen Kohlenwasserstoffrest mit 1 bis 18 Kohlenstoffatomen, der durch ein oder mehrere separate Sauerstoffatome unterbrochen sein kann, bedeutet,
      - n: 0, 1, 2, 3 oder 4, vorzugsweise 0 oder 1, ist
      - m: eine ganze Zahl und durchschnittlich 1 bis 80, vorzugsweise 2 bis 50, ist,
(2) Emulgatoren,
   und
(3) Wasser.

Die erfindungsgemäßen Dispersionen enthalten vorzugsweise mindestens 5 Gew.-%, bevorzugt mindestens 10 Gew.-%, und vorzugsweise höchstens 60,0 Gew.-%, bevorzugt höchstens 45 Gew.-%, besonders bevorzugt höchstens 35 Gew.-%, vernetzte Organopolysiloxane (1).

Die erfindungsgemäßen Dispersionen enthalten vorzugsweise mindestens 0,5 Gew.-%, bevorzugt mindestens 0,8 Gew.-%, besonders bevorzugt mindestens 1,2 Gew.-%, und vorzugsweise höchstens 20 Gew.-%, bevorzugt höchstens 15 Gew.-%, besonders bevorzugt höchstens 10 Gew.-% Emulgatoren (2).

Die erfindungsgemäßen Dispersionen enthalten vorzugsweise mindestens 1 Gew.-%, bevorzugt mindestens 5 Gew.-%, insbesondere mindestens 10 Gew.-%, und vorzugsweise höchstens 94,5 Gew.-%, bevorzugt höchstens 85 Gew.-%, insbesondere höchstens 80 Gew.-% Wasser (3).

Gegenstand der Erfindung sind weiterhin vorvernetzte Organopolysiloxane, die Einheiten der Formel

R₂SiO_{2/2} (I),

und durchschnittlich mindestens eine Struktureinheit, vorzugsweise mindestens zwei Struktureinheiten, der Formel

   SiR¹O_{2/2}-Y-SiR¹O_{2/2} (III)
enthalten, wobei
Y einen zweiwertigen Rest der Formel

   -R²-[NR³-R⁴-]ₙ-NR³-C(O)-C(O)NR³-Z-NR³-C(O)-C(O)-NR³-[R⁴-NR³]ₙ-R²-

   bedeutet,
R, R¹, R², R³, R⁴, Z und n die oben dafür angegebene Bedeutung haben.

Die vorvernetzten Organopolysiloxane (1) können weiterhin Struktureinheiten der Formel

R¹ASiO_{2/2} (II)

enthalten, wobei
- A: gleich oder verschieden sein kann und einen Rest der Formel

-R²-[NR³-R⁴-]ₙNR³₂

bedeutet,
- R²: einen SiC-gebundenen, zweiwertigen linearen oder verzweigten Kohlenwasserstoffrest mit 1 bis 18 Kohlenstoffatomen, vorzugsweise einen Alkylenrest mit 3 bis 10 Kohlenstoffatomen, bedeutet,
- R³: ein Wasserstoffatom, einen Alkylrest mit 1 bis 8 Kohlenstoffatomen oder einen Acylrest, wie Acetylrest, bedeutet, vorzugsweise ein Wasserstoffatom ist,
- R⁴: einen zweiwertigen Kohlenwasserstoffrest mit 1 bis 6 Kohlenstoffatomen, vorzugsweise einen Alkylenrest mit 1 bis 6 Kohlenstoffatomen, bedeutet und
- n: 0, 1, 2, 3 oder 4, vorzugsweise 0 oder 1, ist.

Überraschenderweise wurde gefunden, dass seitenständig Amino-funktionalisierte Organopolysiloxane, die mit Oxalamidoester-terminierte Polyether verbrückt sind, sowie deren wässrige Dispersionen als Wirkstoff in Zusammensetzungen für die Pflege und Reinigung von faserigen Substraten, insbesondere Textilien, eingesetzt werden können, wobei die damit behandelten faserigen Substrate, insbesondere Textilien, deutlich verbesserte Eigenschaften, insbesondere gute Hydrophilie-Eigenschaften, aufweisen.

Die wässrigen Dispersionen von erfindungsgemäßen vorvernetzten Organopolysiloxanen bilden vorzugsweise nach Entfernen des Wassers elastomere Filme.

Die erfindungsgemäßen vorvernetzten Organopolysiloxane sind vorzugsweise hydrophil.

Bei den erfindungsgemäßen vorvernetzten Organopolysiloxanen (1) handelt es sich insbesondere um solche ausgewählt aus der Gruppe der Formeln 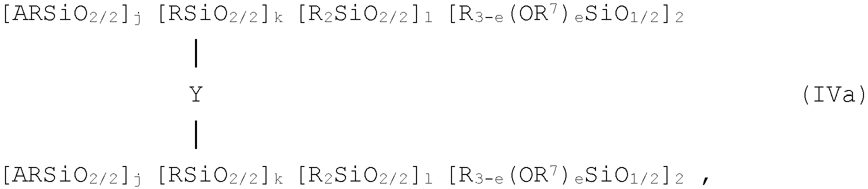 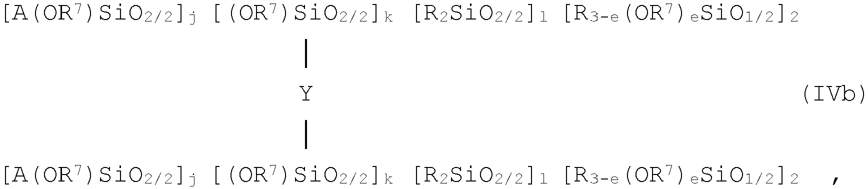 und deren Mischungen wobei
- R, R⁷, A und Y: die oben dafür angegebene Bedeutung haben,
- e: gleich 0 oder 1 ist,
- j: gleich 0 oder eine ganze Zahl zwischen 1 und 15 ist,
- k: mindestens 1, vorzugsweise mindestens 2, und höchstens 15, vorzugsweise höchstens 10, bevorzugt höchstens 7, ist und
- l: mindestens 40, vorzugsweise mindestens 65, bevorzugt mindestens 110, und höchstens 1000, vorzugsweise höchstens 800, bevorzugt höchstens 500, ist.

Gegebenenfalls können in den erfindungsgemäßen vorvernetzten Organopolysiloxanen (1) auch geringe Mengen an Struktureinheiten T (RSiO_{3/2}) oder Q (SiO_{4/2}) enthalten sein.

Im Rahmen dieser Erfindung soll Formel (IVa) bzw. (IVb) so verstanden werden, dass j Einheiten [ARSiO_{2/2}] bzw. j Einheiten [A(OR⁷)SiO_{2/2}] und k Einheiten [RSiO_{2/2}]-Y-[RSiO_{2/2}] bzw. k Einheiten [(OR⁷)SiO_{2/2}]-Y-[(OR⁷)SiO_{2/2}] und l Einheiten [R₂SiO_{2/2}] in beliebiger Weise, beispielsweise als Block oder statistisch, im Organopolysiloxanmolekül verteilt sein können.

Es kann eine Art von erfindungsgemäßen vernetzten Organopolysiloxanen (1) eingesetzt werden oder Mischungen von zwei oder mehreren Arten.

Gegenstand der Erfindung ist weiterhin ein Verfahren zur Herstellung der wässrigen Dispersionen von vorvernetzten Organopolysiloxane (1), dadurch gekennzeichnet, dass Organopolysiloxane (4), die Einheiten der Formel

R₂SiO_{2/2} (I),

und durchschnittlich mindestens eine Struktureinheit der Formel

   R¹ASiO_{2/2} (II)
enthalten, wobei
R, R¹ und A die oben dafür angegebene Bedeutung haben, mit Oxalamidoester-terminierten Polyethern (5) der Formel (V) 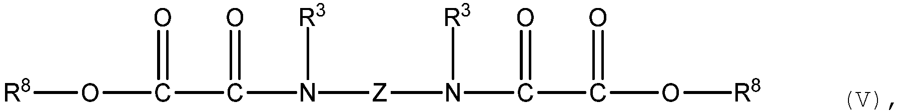
wobei Z und R³ die oben dafür angegebene Bedeutung haben, R⁸ gleich oder unterschiedlich ist und einen einwertigen Kohlenwasserstoffrest mit 1 bis 18 Kohlenstoffatomen, der durch ein oder mehrere separate Sauerstoffatome unterbrochen sein kann, bedeutet,
in Gegenwart von Emulgatoren (2) und Wasser (3) umgesetzt werden.

Organopolysiloxan (4) und Oxalamidoester-terminierter Polyether (5) werden dabei in Art und Menge so gewählt, dass die Organopolysiloxane (1) in den erhaltenen Dispersionen vernetzt sind.

Die erfindungsgemäßen Dispersionen enthalten daher vorzugsweise keine Katalysatoren.

Die erfindungsgemäßen Dispersionen enthalten daher bereits vorvernetzte, vorzugsweise hydrophile Organopolysiloxane, die nach dem Entfernen des Wassers weiter vernetzen und vorzugsweise elastomere Filme bilden, wobei die vernetzten, vorzugsweise hydrophilen Organopolysiloxane hochmolekulare verzweigte Strukturen aufweisen.

Vorzugsweise sind die erfindungsgemäßen Dispersionen wässrige Suspensionen oder wässrige Emulsionen von vorvernetzten Organopolysiloxanen.

Die erfindungsgemäßen Dispersionen bilden beim Eintrocknen
- ohne Katalysatorzugabe oder Veränderung des pH-Wertes - ein Siliconnetzwerk, vorzugsweise ein elastisches Siliconnetzwerk aus.

Die erfindungsgemäßen wässrigen Dispersionen können gegebenenfalls neben den vorvernetzten Organopolysiloxanen (1), Emulgatoren (2) und Wasser (3)
weitere Inhaltsstoffe, die an der Umsetzung nicht direkt teilnehmen, enthalten, wie
(6) nichtwässrige Lösemittel oder Co-Emulgatoren und
(7) Hilfsstoffe, beispielsweise pH-Regulierungsmittel, Salze, Schauminhibitoren, Verdicker und/oder Schutzkolloide, Konservierungsmittel, Desinfektionsmittel, Netzmittel, Korrosionsinhibitoren, Farbstoffe, Duftstoffe oder deren Mischungen.

Beispiele für Kohlenwasserstoffreste R sind
Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest,
Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest, Cycloalkylreste, wie Cyclopentyl-, Cyclohexyl-, Cycloheptyl-und Methylcyclohexylreste,
Alkenylreste, wie der Vinyl-, 5-Hexenyl-, Cyclohexenyl-, 1-Propenyl-, Allyl-, 3-Butenyl- und 4-Pentenylrest, Arylreste, wie der Phenyl-, Naphthyl-, Anthryl- und Phenanthrylrest,
Alkarylreste, wie o-, m-, p-Tolylreste; Xylylreste und Ethylphenylreste und
Aralkylreste, wie der Benzylrest, der alpha- und der beta-Phenylethylrest oder der 2-Phenylpropylrest.

Bevorzugt sind als Reste R der Methyl-, Ethyl-, Octyl- und Phenylrest, besonders bevorzugt sind der Methyl- und Ethylrest.

Beispiele für substituierte Reste R sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m- und p-Chlorphenylrest.

Beispiele für Rest R¹ sind die vorstehend bei R aufgeführten Alkylreste sowie der Hydroxy-, der Methoxy-, der Ethoxy- und der Hexoxyethylrest, wobei es sich bei dem Rest R¹ bevorzugt um den Methyl-, den Ethyl-, sowie den Hydroxy-, den Methoxy-und Ethoxyrest handelt.

Der Rest A ist ein einwertiger Rest der Formel

-R²-[NR³-R⁴-]ₙNR³₂,

der mindestens eine basische Aminogruppe enthält.

Beispiele für R² sind zweiwertige Reste wie die Methylengruppe, die 1,2-Ethylengruppe, die 1,3-Propylengruppe, die 1,3-Butylengruppe, die 1,4-Butylengruppe, die 1,5-Pentylengruppe und die 1,6-Hexylengruppe.

Besonders bevorzugte Beispiele sind die die 1,3-Propylengruppe und die 1,3-Butylengruppe.

Beispiele für R⁴ sind zweiwertige Reste wie die 1,2-Ethylengruppe, die 1,3-Propylengruppe, die 1,3-Butylengruppe, die 1,4-Butylengruppe, die 1,5-Pentylengruppe und die 1,6-Hexylengruppe.

Besonders bevorzugtes Beispiel ist die die 1,2-Ethylengruppe.

Vorzugsweise ist R³ ein Wasserstoffatom, ein Alkylrest mit 1 bis 8 Kohlenstoffatomen oder die Acetylgruppe.

Beispiele für Alkylreste R³ sind der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexyl- und der iso-Hexylrest. Bevorzugte Beispiele für Reste R³ sind das Wasserstoffatom oder der Methylrest, besonders bevorzugt ist das Wasserstoffatom.

Beispiele für den Rest A sind

-(CH₂)₃NH₂

-(CH₂)₃-NH-(CH₂)₂-NH₂

-CH₂CH(CH₃)CH₂-NH-(CH₂)₂-NH₂

-(CH₂)₃-NH(Cyclohexyl)

-(CH₂)₃-NHCH₃

-(CH₂)₃-NHCH₂CH₃

-(CH₂)₄-NH₂

-CH₂CH(CH₃)CH₂-NH₂

-(CH₂)₃-NH-(CH₂)₂-NHCH₃

-(CH₂)₃-NH-(CH₂)₂-NHCH₂CH₃

-(CH₂)₃[-NH-CH₂CH₂]₂-NH₂.

Beispiele für den Rest Y sind

-(CH₂)₃-NH-C(O)-C(O)-NH-Z-NH-C(O)-C(O)-NH-(CH₂)₃-

-(CH₂)₃-NH-(CH₂)₂-NH-C(O)-C(O)-NH-Z-NH-C(O)-C(O)-NH-(CH₂)₂-NH- (CH₂)₃-

-CH₂CH(CH₃)CH₂-NH-(CH₂)₂-NH-C(O)-C(O)-NH-Z-NH-C(O)-C(O)-NH- (CH₂)₂-NH-CH₂CH(CH₃)CH₂-

-(CH₂)₃-N(Cyclohexyl)-C(O)-C(O)-NH-Z-NH-C(O)-C(O)- N(Cyclohexyl)- (CH₂)₃-

-(CH₂)₃-NCH₃-C(O)-C(O)-NH-Z-NH-C(O)-C(O)-NCH₃-(CH₂)₃-

-(CH₂)₃-N(CH₂CH₃)-C(O)-C(O)-NH-Z-NH-C(O)-C(O)-N(CH₂CH₃)-(CH₂)₃-

-(CH₂)₄-NH-C(O)-C(O)-NH-Z-NH-C(O)-C(O)-NH-(CH₂)₄-

-CH₂CH(CH₃)CH₂-NH-C(O)-C(O)-NH-Z-NH-C(O)-C(O)-NH- CH₂CH(CH₃)CH₂-

-(CH₂)₃-NH-(CH₂)₂-NCH₃-C(O)-C(O)-NH-Z-NH-C(O)-C(O)-NCH₃-(CH₂)₂- NH-(CH₂)₃-

-(CH₂)₃-NH-(CH₂)₂-N(CH₂CH₃)-C(O)-C(O)-NH-Z-NH-C(O)-C(O)- N(CH₂CH₃)-NH-(CH₂)₃-

-(CH₂)₃[-NH-CH_{2C}H_{2]2}-NH-C(O)-C(O)-NH-Z-NH-C(O)-C(O)-NH- [CH₂CH₂-NH-]₂(CH₂)₃-,

wobei Z die oben dafür angegebene Bedeutung hat.

Beispiele für den Rest Z sind zweiwertige Kohlenwasserstoffoxyreste, wie die Polyethylenglykolreste oder Polypropylenglykolreste oder Mischungen aus Polyethylenglykol- und Polypropylenglykolresten. Der Rest Z hat bevorzugt ein Molekulargewicht (Mn Zahlenmittel) von 50 g/mol bis 4.500 g/mol, ganz besonders bevorzugt ein Molekulargewicht von 75 g/mol bis 2500 g/mol.

Beispiele für den Rest Z sind

-(CH₂-CH₂-O)ₘ-CH₂-CH₂-

-(CH(CH₃)-CH₂-O)ₘ-CH₂-CH(CH₃)-

-(CH(CH₃)-CH₂-O)ₓ-(CH₂-CH₂-O)_{y}-(CH(CH₃)-CH₂-O)_{z}-CH₂-CH(CH₃)-
wobei m durchschnittlich 1 bis 80, vorzugsweise 2 bis 50, ist
und x, y und z jeweils 0 oder eine ganze Zahl sind, mit der Maßgabe, dass die Summe x + y + z durchschnittlich 2 bis 80, vorzugsweise 3 bis 50, ist.

Bevorzugte Beispiele für den Rest Z sind

-(CH₂-CH₂-O)₂-CH₂-CH₂-

-(CH(CH₃)-CH₂-O)_{ca.2,5}-CH₂-CH(CH₃)-

-(CH(CH₃)-CH₂-O)_{ca.6,1}-CH₂-CH(CH₃)-

-(CH(CH₃)-CH₂-O)_{ca.33}-CH₂-CH(CH₃)-

-(CH(CH₃)-CH₂-O)_{ca.0,6}-(CH₂-CH₂-O)₂-(CH(CH₃)-CH₂-O)_{ca.0,6}-CH₂-CH(CH₃)-

-(CH(CH₃)-CH₂-O)_{ca.1,6}-(CH₂-CH₂-O)₉-(CH(CH₃)-CH₂-O)_{ca.1,8}-CH₂-CH(CH₃)-

-(CH(CH₃)-CH₂-O)_{ca.3}-(CH₂-CH₂-O)_{ca.12,6}-(CH(CH₃)-CH₂-O)_{ca.3}-CH₂-CH(CH₃)-

-(CH(CH₃)-CH₂-O)_{ca.3}-(CH₂-CH₂-O)_{ca.39}-(CH(CH₃)-CH₂-O)_{ca.3}-CH₂-CH(CH₃)-

Bei den erfindungsgemäßen Dispersionen können als Emulgatoren (2) alle Emulgatoren eingesetzt werden, die dem Fachmann zur Herstellung von Siliconemulsionen bekannt sind, wie z. B. nichtionische, anionische, kationische oder amphotere Emulgatoren; die Emulgatoren (2) können sowohl einzeln als auch als Mischungen verschiedener Emulgatoren verwendet werden.

(Nicht einschränkende) Beispiele für verwendete nichtionische Emulgatoren sind:
1. Alkylpolyglycolether, vorzugsweise solche mit 3 bis 40 EO-Einheiten und Alkylresten von 8 bis 20 C-Atomen.
2. Carbonsäurepolyglycolester, insbesondere Fettsäurepolyglycolester, vorzugsweise solche mit größer 6 EO-Einheiten und Carbonsäureresten von 8 bis 20 C-Atomen.
3. Ethoxylierte oder nicht ethoxylierte Sorbitanfettsäureester.
4. Ethoxyliertes Rizinusöl oder hydrierte Varianten.
5. Polyglycerincarbonsäureester.
6. Alkylpolyglykoside der Formel R*-O-Gₒ, worin R* einen linearen oder verzweigten, gesättigten oder ungesättigten Alkylrest mit im Mittel 8-24 C-Atomen und Gₒ einen Oligoglykosidrest mit im Mittel o = 1-10 Hexose- oder Pentoseeinheiten oder Gemischen davon bedeuten.
7. Alkylarylpolyglycolether, vorzugsweise solche mit 5 bis 30 EO-Einheiten und 8 bis 20 C-Atomen in den Alkyl- und Arylresten.
8. Ethylenoxid/Propylenoxid(EO/PO)-Blockcopolymere, vorzugsweise solche mit 8 bis 40 EO- bzw. PO-Einheiten.
9. Polyvinylalkohol, der noch 5 bis 50 mol%, vorzugsweise 8 bis 20 mol-% Vinylacetateinheiten aufweist, mit einem Polymerisationsgrad von 500 bis 3000.
10. Additionsprodukte von Alkylaminen mit Alkylresten von 8 bis 22 C-Atomen mit Ethylenoxid oder Propylenoxid.
11. Naturstoffe und deren Derivate, wie Lecithin, Lanolin, Saponine, Cellulose; Cellulosealkylether und Carboxyalkylcellulosen, deren Alkylgruppen jeweils bis zu 4 Kohlenstoffatome besitzen.
12. Polare Gruppen, enthaltend insbesondere die Elemente O, N, C, S, P, Si, enthaltende lineare Organo(poly)siloxane, insbesondere solche mit Alkoxygruppen mit bis zu 24 C-Atomen und/oder bis zu 40 EO- und/oder PO-Gruppen.
13. Fettsäuren mit 6 bis 24 C-Atomen.

Bevorzugte nicht-ionische Emulgatoren sind
1. Alkylpolyglycolether, vorzugsweise solche mit 3 bis 30 EO-Einheiten und Alkylresten von 8 bis 20 C-Atomen wie z.B. Ceteareth-20, Oleth-10, Oleth-20, Laureth-3, Laureth-4, Laureth-20, Laureth-23, Trideceth-5, Trideceth-6, Trideceth-8, Trideceth-10, Trideceth-12, Trideceth-16, Trideceth-20, Steareth-20 oder Steareth-21 (nach INCI-Bezeichnung).
2. Carbonsäurepolyglycolester, insbesondere Fettsäurepolyglycolester, vorzugsweise solche mit größer 6 EO-Einheiten und Carbonsäureresten von 8 bis 20 C-Atomen, wie z.B. PEG-20 Laurat, PEG-7 Olivate, PEG-8 Oleate, PEG-8 Laurate, PEG-4 Stearate, PEG-6 Stearate, PEG-20-Stearate oder PEG-100 Stearate (nach INCI-Bezeichnung).
3. Ethoxylierte oder nicht ethoxylierte Sorbitanfettsäureester, wie z.B. Sorbitan Laurate, Polysorbat 20, Polysorbat 60, Polysorbat 80 oder Polysorbat 85 (nach INCI-Bezeichnung).
4. Ethoxyliertes Rizinusöl oder hydrierte Varianten, wie z.B. (Bezeichnung nach INCI-Nomenklatur) PEG 200 Castor Oil oder PEG-60 hydrogenated Castor Oil.
5. Polyglycerincarbonsäureester, wie z.B. Polyglycerin-10 Oleat, Polyglycerin-10 Laurat oder Polyglycerin-10-Stearat.
6. Alkylpolyglykoside der Formel R*-O-Gₒ, worin R* einen linearen oder verzweigten, gesättigten oder ungesättigten Alkylrest mit im Mittel 8-24 C-Atomen und Gₒ einen Oligoglykosidrest mit im Mittel o = 1-10 Hexose- oder Pentoseeinheiten oder Gemischen davon bedeuten, wie z.B. Glucopon 215, Glucopon 225, Glucopon 600 (Bezeichnung nach Handelsnamen).

(Nicht einschränkende) Beispiele für anionische Emulgatoren sind:
1. Alkylsulfate, besonders solche mit einer Kettenlänge von 8 bis 18 C-Atomen, Alkyl- und Alkarylethersulfate mit 8 bis 18 C-Atomen im hydrophoben Rest und 1 bis 40 Ethylenoxid (EO)- bzw. Propylenoxid(PO)einheiten.
2. Sulfonate, besonders Alkylsulfonate mit 8 bis 18 C-Atomen, Alkylarylsulfonate mit 8 bis 18 C-Atomen, Tauride, Ester und Halbester der Sulfobernsteinsäure mit einwertigen Alkoholen oder Alkylphenolen mit 4 bis 15 C-Atomen; gegebenenfalls können diese Alkohole oder Alkylphenole auch mit 1 bis 40 EO-Einheiten ethoxyliert sein.
3. Alkali- und Ammoniumsalze von Carbonsäuren mit 8 bis 20 C-Atomen im Alkyl-, Aryl-, Alkaryl- oder Aralkylrest, insbesondere Alkali- und Ammoniumsalze von Fettsäuren vorzugsweise solche mit Carbonsäureresten von 8 bis 20 C-Atomen.
4. Phosphorsäureteilester und deren Alkali- und Ammoniumsalze, besonders Alkyl- und Alkarylphosphate mit 8 bis 20 C-Atomen im organischen Rest, Alkylether- bzw. Alkaryletherphosphate mit 8 bis 20 C-Atomen im Alkyl- bzw. Alkarylrest und 1 bis 40 EO-Einheiten.

Bevorzugte anionische Emulgatoren sind
1. Alkylsulfate, wie Natriumlaurylsulfat, Ammoniumlaurylsulfat, Sekundäres C13-C18-Alkansulfonat-Natriumsalz, C12-C18-Fettalkoholsulfat-Natriumsalz, Alkylethersulfate, wie C12-C14-Fettalkohol-2EO-ethersulfat-Ammoniumsalz, C12-C14-Fettalkohol-2EO-ethersulfat-Natriumsalz, Alkylarylethersulfate, wie Sekundäres C10-C13-n-Alkylbenzolsulfonat-Natriumsalz
**2.** Alkylsulfonate, wie Dinatrium 2-Sulfolaurat,
**3.** Alkali- und Ammoniumsalze von Carbonsäuren mit 8 bis 20 C-Atomen im Alkyl-, Aryl-, Alkaryl- oder Aralkylrest, besonders bevorzugte anionische Emulgatoren sind Alkali-und Ammoniumsalze von Fettsäuren, vorzugsweise solche mit Carbonsäureresten von 8 bis 20 C-Atomen, wie z.B. Natriumsalze, Kaliumsalze, Triethanolammoniumsalze der Laurinsäure, Myristinsäure, Palmitinsäure, Stearinsäure oder auch Ölsäure.
4. Phosphorsäureteilester, wie C8/C10-Fettalkohol-Phosphorsäure-teilester Natriumsalz (Crodaphos 810A) oder Monoethanolaminsalz.

(Nicht einschränkende) Beispiele für kationische Emulgatoren sind:
1. Salze von primären, sekundären und tertiären Fettaminen mit 8 bis 24 C-Atomen mit Essigsäure, Schwefelsäure, Salzsäure und Phosphorsäuren.
2. Alkylpyridinium-, Alkylimidazolinium- und Alkyloxazoliniumsalze, insbesondere solche, deren Alkylkette bis zu 18 C-Atome besitzt, speziell die Halogenide, Sulfate, Phosphate und Acetate.
3. Quaternäre Alkyl- und Alkylbenzolammoniumsalze, insbesondere solche, deren Alkylgruppen 6 bis 24 C-Atome besitzen, insbesondere die Halogenide, Sulfate, Phosphate und Acetate.

(Nicht einschränkende) Beispiele für amphotere Emulgatoren sind:
1. Langkettig substituierte Aminosäuren, wie N-Alkyl-di-(aminoethyl-)glycin oder N-Alkyl-2-aminopropionsäuresalze.
2. Betaine, wie N-(3-Acylamidopropyl)-N,N-dimethylammoniumsalze mit einem C8-C18-Acylrest und Alkyl-imidazolium-Betaine oder quaternisierte Alkyl oder substituierte Alkylderivate des N,N-Dimethyl-Glycins.

Bevorzugt als Emulgatoren zur Herstellung für wässrige Dispersionen vorvernetzter hydrophiler Organopolysiloxane sind nichtionische Emulgatoren, insbesondere die vorstehend aufgeführten Alkylpolyglycolether.

Der Bestandteil (2) kann aus einem der o. g. Emulgatoren oder aus einem Gemisch zweier oder mehrerer o. g. Emulgatoren bestehen, er kann in reiner Form oder als Lösungen eines oder mehrerer Emulgatoren in Wasser oder organischen Lösungsmitteln eingesetzt werden.

Als weitere Inhaltsstoffe in den erfindungsgemäßen Dispersionen können gegebenenfalls (6) nichtwässrige Lösemittel oder Co-Emulgatoren eingesetzt werden.

Die erfindungsgemäßen Dispersionen enthalten
(6) nichtwässrige Lösemittel oder Co-Emulgatoren in einer Menge von vorzugsweise mindestens 0,1 Gew.-%, bevorzugt mindestens 0,4 Gew.-%, insbesondere mindestens 0,8 Gew.-%, und vorzugsweise höchstens 20 Gew.-%, bevorzugt höchstens 15 Gew.-%, insbesondere höchstens 10 Gew.-%.

Die nichtwässrigen Lösungsmittel (6), die in den erfindungsgemäßen wässrigen Dispersionen eingesetzt werden können, stammen beispielsweise aus der Gruppe der ein- oder mehrwertigen Alkohole, Alkanolamine oder Glycolether.

Beispiele für Lösungsmittel sind Ethanol, n- oder i-Propanol, Butanolen, wie 1-Butanol, 2-Butanol oder 2-Methyl-2-propanol, Pentanole, wie 1-Pentanol, 2-Pentanol oder 3-Pentanol, Hexanole, wie 1-Hexanol, 2-Hexanol oder 3-Hexanol, Heptanole, wie 1-Heptanol, 2-Heptanol, 3-Heptanol oder 4-Heptanol, Octanole, wie 1-Octanol, 2-Octanol, 3-Octanol oder 4-Octanol, Glycol, Propandiol, Butandiole, wie 1,2-Butandiol oder 1,3-Butandiol, Hexandiole, wie 1,2-Hexandiol oder 2-Methylpentan-2,4-diol, Octandiole, wie 2-Ethylhexan-1,3-diol oder 1,2-Octandiol, Glycerin, Diglykol, Propyl- oder Butyldiglykol, Ethylenglykolmethylether, Ethylenglykolethylether, Ethylenglykolpropylether, Ethylenglykolmono-n-butylether, Diethylenglykolmethylether, Diethylenglykolethylether, Diethylenglykolmono-n-butylether, Propylenglykolmethylether, Propylenglykolethylether, Propylenglykolpropylether, Propylenglykol-b-butylether, Propylen-glykol-t-butylether, Methoxytriglykol, Ethoxytriglykol, Butoxytriglykol, Dipropylenglykolmonomethylether, Dipropylenglykolmonoethylether, 1-Butoxyethoxy-2-propanol oder 3-Methyl-3-methoxybutanol, 1-Aminobutan, 2-Aminobutan, 2-Amino-2-methyl-propan, 1-Aminopentan, 2-Aminopentan, 1-Aminohexan, 1-Aminoheptan und 1-Aminooctan; Ethyl-, Propyl-, Isopropyl-, Butyl-, Isobutyl-, Pentyl-, Isopentyl- und Hexylacetat; Methyl-, Ethyl- und tert.-Butylpropionat; Methyl-, Ethyl-, Propylund Butylbutyrat; 2-Butanon, 2-Pentanon, 3-Pentanon, 4-Methyl-2-pentanon, 2-Hexanon, 3-Hexanon, 2-Heptanon, 3-Heptanon, 4-Heptanon, 5-Methyl-3-Heptanon, 2-Octanon und 3-Octanon sowie Mischungen dieser Cotenside.

Beispiele für bevorzugte nichtwässrige Lösungsmittel oder Co-Emulgatoren (6) sind 1-Alkanole der vorstehend aufgeführten Beispiele mit C₅- bis C₈-Ketten, Alkandiole der vorstehend aufgeführten Beispiele mit C₄- bis C₈-Kette, Glycerin, Propyl-, Butyl- und Pentylacetat, 2-Pentanon sowie die oben aufgeführten Ethylenglykol-, Propylenglykol-, Diproplyenglykol- oder Diethylenglykolmonoalkylether.

Als nichtwässrige Lösungsmittel oder Co-Emulgatoren (6) besonders bevorzugt sind 1-Pentanol, 1-Hexanol, 1-Octanol, Propandiol, 1,3-Butandiol, 1,2-Hexandiol, 2-Ethylhexan-1,3-diol, 1,2-Octandiol, Glycerin, Diethylenglykolmethylether, Diethylenglykolethylether, Diethylenglykolmono-n-butylether, Propylenglykolmethylether.

Ferner können Polyalkylenglykole, wie Polyethylenglykole (z.B. PEG600, PEG1000 oder PEG6000) oder Polypropylenglykole (z.B. PPG2000), Polyalkylenblockpolymere, wie die sogenannten Poloxamere (Blockcopolymere aus Ethylenoxid- und Propylenoxid-Einheiten), wie z.B. PEG-PPG-PEG-Blockpolymer Pluronic^{®} L-31, PEG-PPG-PEG-Blockpolymer Pluronic^{®} L-61, PPG-PEG-PPG-Blockpolymer Pluronic^{®} 17R4, PPG-PEG-PPG Pluronic^{®}-Blockpolymer 31R1 (erhältlich bei Sigma-Aldrich) oder auch Poloxamine (Copolymere aus Ethylenoxid- und Propylenoxid-Einheiten, die über einen Ethylendiamin-Kern verbrückt sind), wie z.B. Tetronic 701 oder Tetronic 90R4 (erhältlich bei Sigma-Aldrich) als Co-Emulgatoren verwendet werden.

Als weitere Inhaltsstoffe in den erfindungsgemäßen Dispersionen können gegebenenfalls (7) Hilfsstoffe, wie pH-Regulierungsmittel, Salze, Schauminhibitoren, Verdicker und/oder Schutzkolloide, Konservierungsmittel, Desinfektionsmittel, Netzmittel, Korrosionsinhibitoren, Farbstoffe, Duftstoffe oder deren Mischungen, eingesetzt werden.

Als pH-Regulierungsmittel einsetzbar sind hier sämtliche bekannte Säuren bzw. Laugen, sofern sich ihr Einsatz nicht aus anwendungstechnischen oder ökologischen Gründen bzw. aus Gründen des Verbraucherschutzes verbietet.

Die eingesetzten Säuren dienen dabei zur Einstellung eines gewünschten pH-Werts oder können Säureadditionssalze mit den Amino-haltigen Resten (A) oder auch (Y) der vorvernetzten Organopolysiloxane (1) ausbilden.

Beispiele für Mineralsäuren, die sich beispielsweise mit den vorstehend genannten Amino-haltigen Resten (A) oder auch (Y) umsetzen lassen, sind Salz-, Perchlor-, Schwefel-, schweflige, Salpeter-, salpetrige, Fluss-, Phosphor-, Diphosphor- und Polyphosphorsäuren. Beispiele für geeignete Carbonsäuren sind Ameisen-, Essig-, Propion-, Butansäuren, Citronensäure, Trichlor-, Dichlor- und Chloressigsäure, Trifluoressigsäure, Cyanessigsäure, Phenylessigsäure, Benzoesäure, m- und p-Nitrobenzoesäure, Oxalsäure, Malonsäure und Milchsäure.

Besonders bevorzugt sind Essigsäure, Milchsäure und Ameisensäure.

Beispiele für Salze (Elektrolyte) sind insbesondere solche aus der Gruppe der anorganischen Salze, wobei eine breite Anzahl der verschiedensten Salze eingesetzt werden kann. Bevorzugte Kationen sind die Alkali- und Erdalkalimetalle, bevorzugte Anionen sind die Halogenide und Sulfate. Aus herstellungstechnischer Sicht ist der Einsatz von Natriumacetat oder Natriumchlorid in den erfindungsgemäßen wässrigen Emulsionen bevorzugt.

Beispiele für Schauminhibitoren sind Seifen, Paraffine oder Silikonöle.

Beispiele für Konservierungsmittel sind Methylisothiozolinon, Chlormethylisothiazolinon, Benzylisothiazolinon, Phenoxyethanol, Methylparaben, Ethylparaben, Propylparaben, Butylparaben, Isobutylparaben, Alkalibenzoate, Alkalisorbate, Iodopropynylbutylcarbamat, Benzylalkohol und 2-Brom-2-nitropropan-1,3-diol.

Vorzugsweise werden beim erfindungsgemäßen Verfahren zur Herstellung der vorvernetzten Organopolysiloxane (1) und deren wässrige Dispersionen als Organopolysiloxane (4) solche ausgewählt aus der Gruppe der Formeln

[ARSiO_{2/2}]ⱼ[R₂SiO_{2/2}]ₗ[R₃₋ₑ(OR⁷)ₑSiO_{1/2}]₂ (VIa),

[A(OR¹)SiO_{2/2}]ⱼ[R₂SiO_{2/2}]ₗ[R₃₋ₑ(OR⁷)ₑSiO_{1/2}]₂ (VIb)

und deren Mischungen eingesetzt,
wobei A, R, R¹ und R⁷ sowie j, l und e die oben dafür angegebene Bedeutung haben.

Bei der Herstellung der erfindungsgemäßen Dispersionen kann eine Art von Oxalamidoester-terminiertem Polyether (5) der Formel (V) 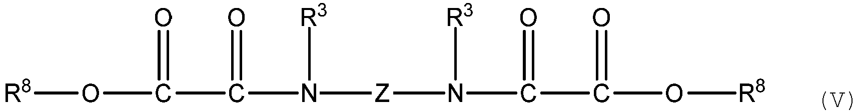
oder verschiedene Arten von Oxalamidoester-terminiertem Polyether (5) der Formel (V) eingesetzt werden,
wobei R³, R⁸ und Z die oben angegebene Bedeutung aufweisen.

Beispiele für Oxalamidoester-terminiertem Polyether (5) sind 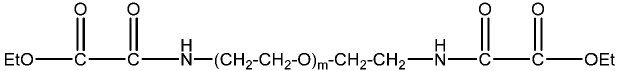 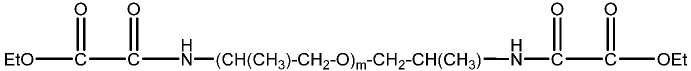 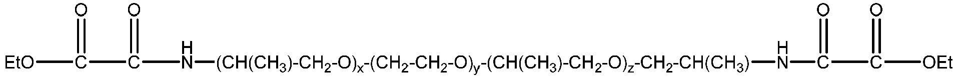 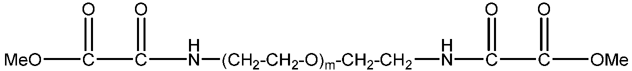 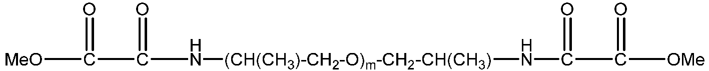 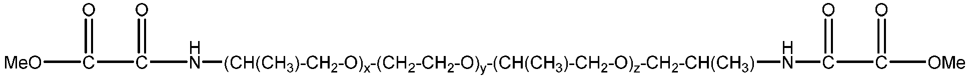
wobei m durchschnittlich 1 bis 80, vorzugsweise 2 bis 50, ist
und x, y und z jeweils 0 oder eine ganze Zahl sind, mit der Maßgabe, dass die Summe x + y + z durchschnittlich 2 bis 80, vorzugsweise 3 bis 50, ist.

Bevorzugte Beispiele für Oxalamidoester-terminierten Polyether (5) sind

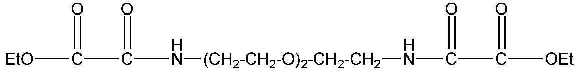

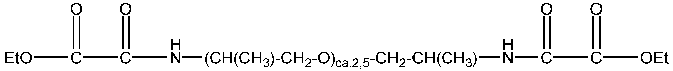

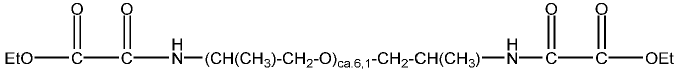

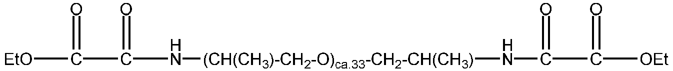

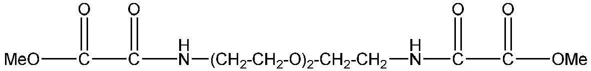

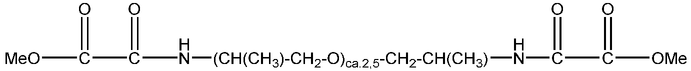

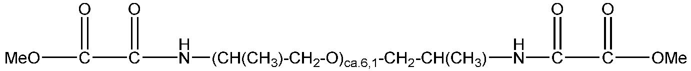

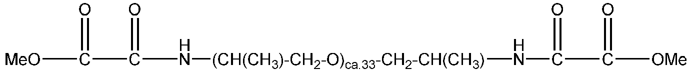

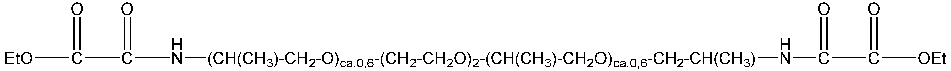

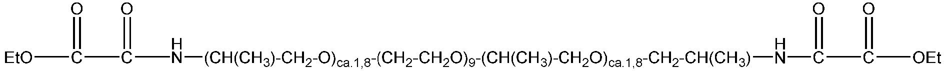

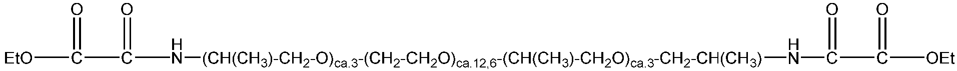

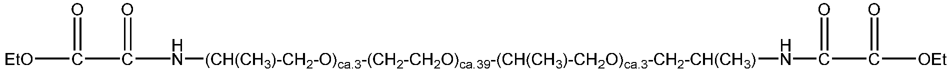

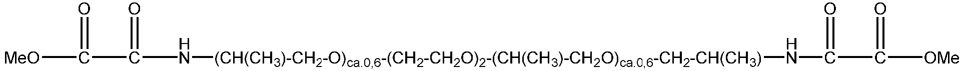

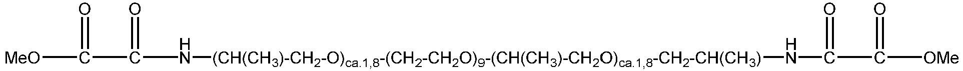

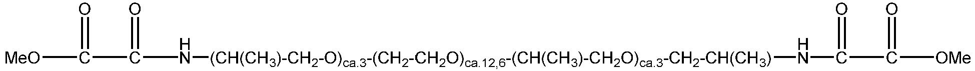

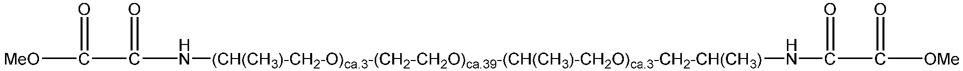

Beim erfindungsgemäßen Verfahren zur Herstellung der vorvernetzten Organopolysiloxane (1) und deren wässrige Dispersionen werden Oxalamidoester-terminierte Polyether (5) in Mengen von vorzugsweise mindestens 0,1 Mol, bevorzugt mindestens 0,15 Mol, und vorzugsweise höchstens 1 Mol, bevorzugt höchstens 0,75 Mol, je Mol Amin-Gruppe in den Organopolysiloxanen (4) eingesetzt.

Oxalamidoester-terminiertem Polyether (5) sind bekannt und wurden zum Beispiel in N. Fukada, Bull. Chem. Soc. Jpn., 69, 1397-1401 (1996) beschrieben. Dort wurden die Oxalamidoester-terminiertem Polyether (5) als Nebenprodukt nach chromatographischer Trennung in Spuren isoliert.

Oxalamidoester-terminierte Polyether (5) können gezielt aus Amino-terminierten Polyethern durch Verwendung von Oxaldiestern, wie zum Beispiel Oxaldiethylester, hergestellt werden, wenn der Oxaldiester im stöchiometrischen Überschuss eingesetzt wird und anschließend der Überschuss destillativ entfernt wird. Oxaldiester werden dabei in einem Überschuss von vorzugsweise 2-20-fachem molarem Überschuss, besonders bevorzugt 2-10-fachem molarem Überschuss eingesetzt. Oxalamidoester-terminierte Polyether (5) werden daher vorzugsweise hergestellt,
indem Amino-terminierte Polyether mit Oxaldiester der Formel

   R⁸-O-C(=O)-C(=O)-O-R⁸
umgesetzt werden,
wobei R³, R⁸ und Z die oben dafür angegebene Bedeutung haben, mit der Maßgabe, dass Oxaldiester in Mengen von vorzugsweise 2 bis 20 Mol, bevorzugt 2 bis 10 Mol, Oxaldiester je Mol Amino-terminiertem Polyether eingesetzt werden.

Die Herstellung der erfindungsgemäßen Dispersionen von vorvernetzten Organopolysiloxanen (1) erfolgt durch intensives Mischen von Organopolysiloxanen (4) mit Oxalamidoester-terminiertem Polyether (5),
Wasser (3),
Emulgatoren (2),
gegebenenfalls nicht-wässrigen Lösemitteln oder Co-Emulgatoren (6) und
gegebenenfalls Hilfsstoffen (7)
miteinander.

Zur Herstellung der erfindungsgemäßen Dispersionen werden vorzugsweise mindestens 5 Gew.-%, bevorzugt mindestens 10 Gew.-%, und vorzugsweise höchstens 60,0 Gew.-%, bevorzugt höchstens 45 Gew.-%, besonders bevorzugt höchstens 35 Gew.-%, Organopolysiloxane (4) eingesetzt, jeweils bezogen auf das Gesamtgewicht der Dispersion.

Die Art der Mischung der Komponenten, die zur Herstellung der erfindungsgemäßen Dispersionen gebraucht werden, ist nicht sehr kritisch und kann in verschiedener Reihenfolge ausgeübt werden. In Abhängigkeit von den Komponenten (2), (3), (4), (5), gegebenenfalls (6) und gegebenenfalls (7) können sich aber bevorzugte Vorgehensweisen ergeben, die im Einzelfall geprüft werden sollten.

Es können z. B. die Komponenten (4) und (5) miteinander vorgemischt werden, daraufhin der (oder die) Emulgator(en) (2) und gegebenenfalls die Komponente (6) zugefügt und danach Wasser (3) und gegebenenfalls Komponenten (7) eingearbeitet werden. Es ist auch möglich, die Komponenten (2) bis (7) der Reihe nach in die Emulgierapparatur zu dosieren. In besonderen Fällen kann es z. B. aufgrund der Siloxanviskosität oder -reaktivität vorteilhaft sein, Oxalamidoester-terminierten Polyether (5) mit einem Organopolysiloxan (4) zu mischen und danach ein anderes Organopolysiloxan (4) einzuarbeiten, oder umgekehrt, je nachdem, wie sich günstigere rheologische Eigenschaften für die Verarbeitung der Komponenten ergeben.

Des Weiteren ist es auch möglich, Oxalamidoester-terminierte Polyether (5) in die fertige Emulsion von Organopolysiloxanen (4) zu geben, um so die gewünschte Reaktion und Vernetzung der Organopolysiloxane (4) in der Emulsion unter Ausbildung der erfindungsgemäßen Dispersion von vernetzten Organopolysiloxanen (1) zu erreichen.

Die bei der Herstellung der Dispersionen als Kondensationsnebenprodukte anfallenden Alkohole R⁸OH, wobei R⁸ die oben dafür angegebene Bedeutung hat, können im Produkt verbleiben oder auch entfernt werden, beispielsweise durch Destillation unter Vakuum, Membranverfahren, oder durch Extraktion.

Der Emulgiervorgang zur Herstellung der erfindungsgemäßen wässrigen Emulsionen von vernetzen Organopolysiloxanen (1) wird vorzugsweise bei Temperaturen von mindestens 10 °C, bevorzugt mindestens 15 °C und vorzugsweise höchstens 80 °C, bevorzugt höchstens 70 °C, durchgeführt.

Die Temperaturerhöhung kommt vorzugsweise durch den Eintrag mechanischer Scherenergie, die für den Emulgierprozess benötigt wird, zustande. Die Temperaturerhöhung wird nicht zur Beschleunigung eines chemischen Prozesses insbesondere der Vernetzung benötigt. Weiterhin wird das erfindungsgemäße Verfahren vorzugsweise beim Druck der umgebenden Atmosphäre durchgeführt, kann aber auch bei höheren oder niederen Drücken durchgeführt werden.

Die Herstellung kann diskontinuierlich oder kontinuierlich erfolgen.

Technologien zur Herstellung von Emulsionen von Organopolysiloxanen sind bekannt. So kann das intensive Mischen und Dispergieren in Rotor-Stator-Rührvorrichtungen, Kolloidmühlen, Hochdruckhomogenisatoren, Mikrokanälen, Membranen, Strahldüsen und ähnlichem, oder mittels Ultraschall erfolgen. Homogenisiergeräte und Verfahren sind z.B. in Ullmann's Encyclopedia of Industrial Chemistry, CD-ROM-Ausgabe 2011, Wiley-VCH Verlag, unter dem Stichwort "Emulsions" beschrieben.

Die mittels Lichtstreuung in den erfindungsgemäßen Dispersionen gemessene mittlere Teilchengröße liegt vorzugsweise im Bereich 0,001 bis 50 µm, bevorzugt bei 0,005 bis 10 µm, besonders bevorzugt im Bereich 0,01 bis 5 µm. Die pH-Werte können von 1 bis 14 variieren, bevorzugt 3 bis 9, besonders bevorzugt 4 bis 8.

Die erfindungsgemäßen vorvernetzten Organopolysiloxane (1) oder deren wässrige Dispersionen finden Verwendung als Wirkstoffe in Produkten zur Behandlung von Substraten, vorzugsweise faserigen Substraten, bevorzugt Textilien, insbesondere in Zusammensetzungen für die Pflege und Reinigung von Substraten, vorzugsweise faserigen Substraten, bevorzugt Textilien.

Gegenstand der Erfindung sind Zusammensetzungen zur Behandlung von Substraten, vorzugsweise faserigen Substraten, insbesondere Textilien, enthaltend erfindungsgemäße wässrige Dispersionen von vorvernetzten Organopolysiloxanen (1) oder erfindungsgemäße vorvernetzte Organopolysiloxane (1).

Ein weiterer Gegenstand der Erfindung ist somit die Verwendung der erfindungsgemäßen vorvernetzten Organopolysiloxane (1) oder deren wässrige Dispersionen in Zusammensetzungen zur Behandlung von Substraten, vorzugsweise faserigen Substraten, bevorzugt Textilien, insbesondere in Zusammensetzungen für die Pflege und Reinigung von Substraten, vorzugsweise faserigen Substraten, bevorzugt Textilien.

Unter dem Begriff "Wirkstoff" wird hier eine Substanz verstanden, die den Zweck erfüllt,
(a) einen Gegenstand zu pflegen, das heißt einen Gegenstand in seiner ursprünglichen Form zu erhalten, die Auswirkungen äußerer Einflüsse (z.B. Zeit, Licht, Temperatur, Druck, Verschmutzung, chemische Reaktion mit anderen, mit dem Gegenstand in Kontakt tretenden reaktiven Verbindungen) wie beispielsweise Altern, Verschmutzen, Materialermüdung, Ausbleichen, zu mindern oder zu vermeiden oder sogar gewünschte positive Eigenschaften des Gegenstandes zu verbessern.

Beispiel im Falle von Textilfasern bzw. -geweben sind das Erzielen einer deutlich verbesserten Weichheit der Fasern/Gewebe nach dem Waschen, die Reduktion der Faltenbildung des Gewebes während der Spül- und Trocknungsstufen, die Reduktion des Auftretens von Falten oder Knicken vor dem Bügeln, die Verringerung der Kraft, die zum Bügeln des Gewebes benötigt wird, der Schutz vor Faltenbildung während des Benutzens, der Erhalt der Form des textilen Flächengewebes beim Waschen, bei der Pflege und bei der Benutzung, die Verbesserung der Benetzbarkeit der Fasern/Gewebe, die Reduzierung des Effekts des Pillings (also der Knötchen- oder Fusselbildung) bei Textilgeweben, das Unterbinden des auftretenden Effekts der Trockenstarre bei trocknender Wäsche, das Erzielen einer größeren Elastizität bei Fasern/Geweben, das Erzielen eines verbesserten Glanzes bei Fasern oder das Reduzieren des Verblassens der Farben bei Fasern/Geweben.

Unter dem Begriff "Wirkstoff" wird weiterhin eine Substanz verstanden, die den Zweck erfüllt,
(b) einen Gegenstand zu reinigen, das heißt die Entfernung von Verunreinigungen als Folge der Benutzung des Gegenstands zu bewirken oder zu unterstützen.

In diesem Zusammenhang sind unter Produkten, insbesondere Zusammensetzungen für die Pflege und Reinigung folgende Formulierungen oder Kompositionen zu verstehen: Formulierungen, die man in Haushalt und Industrie einsetzt, zur Pflege und Reinigung von Oberflächen, wie beispielsweise Fasern, Leder, Stoffe, Holz, Glas, Keramik, Fliesen, Linoleum und Kunststoffe.

Beispiele für Mittel zur Reinigung und Pflege solcher Oberflächen sind Waschmittel (Vollwaschmittel, Colorwaschmittel, Weichspüler etc.), Geschirrspülmittel, Maschinengeschirrspülmittel, Klarspüler, Neutralreiniger, Fensterreinigungsmittel, Allzweckreiniger, Glasreiniger, Sanitärreiniger, WC-Reiniger, Teppichreiniger und Autopflegemittel.

Die erfindungsgemäßen wässrigen Dispersionen werden in diesen Zusammensetzungen vorzugsweise in Mengen von 0,1 bis 40 Gew.-%, bevorzugt von 0,2 bis 30 Gew.-%, besonders bevorzugt 0,4 bis 20 Gew.-%, jeweils bezogen auf das Gesamtgewicht der Zusammensetzungen, eingesetzt.

Die Zusammensetzung, in der die erfindungsgemäßen wässrigen Dispersionen eingesetzt werden, kann vorliegen in Form einer W/O-Emulsion (Wasser-in-Öl-Emulsion), einer O/W-Emulsion (Öl-in-Wasser-Emulsion) oder als multiple Emulsion.

Bevorzugt ist in den Zusammensetzungen das Medium Wasser.

Bei diesen bevorzugten Zusammensetzungen handelt es sich in der Regel um Emulsionen, bei denen eine Phase feindisperser, von einer Emulgatorhülle umschlossener Tröpfchen in einer zweiten Phase (Wassertröpfchen in W/O- oder Lipidvesikel in O/W-Emulsionen) vorliegen.

"Mikroemulsionen" weisen Tröpfchendurchmesser im Bereich von etwa 0,01 µm bis etwa 0,1 µm auf. Bei "Makroemulsionen" findet man Tröpfchendurchmesser im Bereich von ca. 0,1 µm bis ca. 50 µm.

Solche "Makroemulsionen" sind, ohne weitere färbende Zusätze, milchig weiß gefärbt und opak. Feinere "Makroemulsionen", deren Tröpfchendurchmesser im Bereich von ca. 0,1 µm bis ca. 1 µm liegen, sind, wiederum ohne färbende Zusätze, bläulich weiß gefärbt und undurchsichtig. "Mikroemulsionen" sind transparente bzw. transluzente Emulsionen.

Mizellaren und molekularen Lösungen mit Partikeldurchmessern kleiner als ca. 0,01 µm, ist vorbehalten, klar und transparent zu erscheinen.

In den nachfolgenden Beispielen beziehen sich alle Angaben von Teilen und Prozentsätzen, soweit nicht anders angegeben, auf das Gewicht.

Sofern nicht anders angegeben, werden die folgenden Beispiele bei einem Druck der umgebenden Atmosphäre, also bei etwa 1000 hPa, und bei Raumtemperatur, also etwa 20 °C bzw. einer Temperatur, die sich beim Zusammengeben der Reaktanten bei Raumtemperatur ohne zusätzliche Heizung oder Kühlung einstellt, durchgeführt.

Bei den Angaben der HLB-Werte wurde auf die HLB-Werte zurückgegriffen, wie sie von den jeweiligen Herstellern angegeben werden. Da es sich bei Emulgatoren, wie beispielsweise den Polyethern, zumeist um Oligomere/Polymere mit einer Molekulargewichtsverteilung handelt, kann diese Verteilung von Hersteller zu Hersteller unterschiedlich sein. So kann es auch von Hersteller zu Hersteller zu unterschiedlichen Angaben des entsprechenden HLB-Wertes kommen, der sich auch vom theoretisch ermittelten HLB-Wert des jeweils angegebenen chemischen Namens unterscheiden kann.

Dynamische Viskositäten wurden an einem Rheometer "MCR 302" der Fa. Anton Paar nach DIN EN ISO 3219: 1994 und DIN 53019 gemessen, wobei ein Kegel-Platte-System (Kegel CP50-2) mit einem Öffnungswinkel von 2° verwendet wurde. Die Kalibrierung des Gerätes erfolgte mit Normalöl 10000 der Physikalisch-Technischen Bundesanstalt. Die Messtemperatur beträgt 25,00 °C +/- 0,05 °C, die Messzeit 3 min. Die Viskositätsangabe (angegeben in mPa·s) stellt den arithmetischen Mittelwert von drei unabhängig durchgeführten Einzelmessungen dar. Die Messunsicherheit der dynamischen Viskosität beträgt 1,5 %. Der Schergeschwindigkeitsgradient wurde in Abhängigkeit von der Viskosität gewählt und wird für jede Viskositätsangabe separat ausgewiesen.

Kinematische Viskositäten werden mittels eines Viskositäts-Messsystem ViscoSystem^{®} AVS 350 der Fa. Schott unter Verwendung von Ubbelohde Viskosimeterrohren mit Konstante (z.B. der Fa. Windaus oder Fa. VWR) nach DIN 51562-Teil 1 oder ISO/DIS 3105 (einschließlich deren Kalibrierung) bestimmt. Die Messungen erfolgen bei einer Temperatur von 25,0 °C (+- 0,1 °C). Die Viskositätsangabe (angegeben in mm²/s) stellt den arithmetischen Mittelwert von drei unabhängig durchgeführten Einzelmessungen dar: Die Messunsicherheit der kinematischen Viskosität beträgt 1,05 %. Abhängig vom Messbereich werden unterschiedliche Viskosimeterrohre mit entsprechenden Richtkonstanten verwendet:

| Messbereich | Kapillar-Nr. | Richtkonstante |
|---|---|---|
| 0,5 - 3 mm²/s | 0c | 0,003 K |
| 0,8 - 5 mm²/s | 0a | 0,005 K |
| 1,2 - 10 mm²/s | I | 0,01 K |
| 3 - 30 mm²/s | Ic | 0,03 K |
| 10 - 100 mm²/s | II | 0,10 K |
| 30 - 300 mm²/s | IIc | 0,30 K |
| 100 - 1000 mm²/s | III | 1 K |
| 300 - 3000 mm²/s | IIIc | 3 K |
| 1000 - 10000 mm²/s | IV | 10 K |

Angabe des Messbereichs, der entsprechenden Kapillar-Nr. sowie der Konstante nach VWR-Laborkatalog, 2011-2013, S. 645.8.

Die Aminzahl gibt an, wieviel mmol KOH einem Gramm der zu bestimmenden Substanz äquivalent sind. Die Bestimmung der Aminzahl erfolgt nach DIN 16945-Version 1989-03.

¹H-NMR-Spektren werden als Lösung in CDCl₃ an einem Bruker Avance 500-NMR-Spektrometer (5 mm selektiver ¹H-NMR-Probenkopf) mit einer Messfrequenz 500,13 MHz aufgenommen.

Die Auswertung erfolgt wie dem Fachmann bekannt und in folgender Literatur beschrieben: "Über die 1H-, 13C- und 29Si-NMR chemischen Verschiebungen einiger linearer, verzweigter und cyclischer Methyl-Siloxan-Verbindungen", G. Engelhardt, H. Jancke; J. Organometal. Chem. 28 (1971), 293-300; "Chapter 8 - NMR spectroscopy of organosilicon compounds", Elizabeth A. Williams, The Chemistry of Organic Silicon Compounds, 1989 John Wiley and Sons Ltd, 511-533.

Die Partikelgrößen werden an einem Partikelgrößenmessgerät Zetasizer Nano-S, Fa. Malvern, Software Version 6.01 mittels dynamischer Lichtstreuung (Messmethode nach Mie) bestimmt. Dazu werden die Dispersionen mit gefiltertem und entgastem Wasser auf 0,5 Gew.-% verdünnt. Die angegebenen Werte beziehen sich immer auf den Wert D(50). D(50) ist als volumengemittelter Partikeldurchmesser zu verstehen, bei dem 50% aller gemessenen Partikel einen volumengemittelten Durchmesser kleiner als der ausgewiesene Wert D(50) aufweisen. Die Messungen erfolgen bei 25 °C mit folgenden festgelegten Einstellungen: Brechungsindex Wasser (Dispersant RI) bei 1,330; Viskosität (cP) bei 0,8872; Brechungsindex der dispersen Phase (Material RI) bei 1,39; Materialabsorption bei 0,010; Messdauer (Duration Used) bei 50 s; Messposition (Measurement Position) bei 0,65 mm. Die in den Dispersionsbeispielen angegebenen Photonenzählraten ergeben sich aus dem jeweiligen Verdünnungsgrad der Messproben und sind daher unterschiedlich. Wichtig ist dabei nur, dass das Messprogramm die Ergebnisse mit dem Vermerk, Result Quality: Good', freigibt.

### Beispiel 1: Oxalamidoester-terminierter Polyether A

In einem 1 l-Rundkolben werden 200 g α,ω-Diamino-terminierter Polyether, käuflich erwerblich unter dem Handelsnamen Jeffamine^{®} ED-600 (Fa. Huntsman Corporation), zur Entfernung von Wasserspuren und flüchtigen Bestandteilen 2 h lang am Rotationsverdampfer mit Ölheizbad unter einem Vakuum von 0,1 mbar und 100 °C Heizbadtemperatur entflüchtigt. Das entwässerte Jeffamine^{®} ED-600 besitzt eine Aminzahl von 3,3 meq/g (MG = 606 g/mol).

Zu 243 g Diethyloxalat (1,66 mol) der Fa. Sigma-Aldrich (St. Louis, Missouri / USA) werden unter N₂-Schutzgas und unter intensivem Rühren 100 g des entwässerten Jeffamine ED-600 (0,33 mol NH₂) langsam zugetropft, so dass die Reaktionsmischung sich nicht über 50 °C erwärmt. Danach wird noch 1 h bei Raumtemperatur weiter gerührt. Anschließend wird der überschüssige Oxalsäurediethylester am Rotationsverdampfer unter Vakuum (1 mbar) bei einer Badtemperatur von 90 °C abdestilliert. Man erhält 222,3 g einer gelblichen, klaren Flüssigkeit.

### Beispiel 2: Oxalamidoester-terminierter Polyether B

Zu 883 g Diethyloxalat (6,04 mol) der Fa. Sigma-Aldrich (St. Louis, Missouri / USA) werden unter N₂-Schutzgas und unter intensivem Rühren 100 g (1,14 mol NH₂) 3,3'-Ethylendioxybis(propylamin) (MG = 176 g/mol), käuflich erwerblich unter dem Handelsnamen Jeffamine^{®} EDR-176 (Fa. Huntsman Corporation), langsam zugetropft, so dass die Reaktionsmischung sich nicht über 50 °C erwärmt.

Danach wird noch 1 h bei Raumtemperatur weiter gerührt. Anschließend wird der überschüssige Oxalsäurediethylester am Rotationsverdampfer unter Vakuum (1 mbar) bei einer Badtemperatur von 90 °C abdestilliert. Man erhält eine hellbraune, klare Flüssigkeit.

### Beispiel 3: Oxalamidoester-terminierter Polyether C

In einem 1l-Rundkolben werden 250 g α,ω-Diamino-terminierter Polyether, käuflich erwerblich unter dem Handelsnamen

Jeffamine^{®} D-2000 (Fa. Huntsman Corporation), zur Entfernung von Wasserspuren und flüchtigen Bestandteilen 2 h lang am Rotationsverdampfer mit Ölheizbad unter einem Vakuum von 0,1 mbar und 100 °C Heizbadtemperatur entflüchtigt. Das entwässerte Jeffamine^{®} D-2000 besitzt eine Aminzahl von 1,015 meq/g (MG = 1970 g/mol).

Zu 296,66 g Diethyloxalat (2,03 mol) der Fa. Sigma-Aldrich (St. Louis, Missouri / USA) werden unter N₂-Schutzgas und unter intensivem Rühren 200 g (0,20 mol NH₂) entwässertes Jeffamine^{®} D-2000 langsam zugetropft, so dass die Reaktionsmischung sich nicht über 50 °C erwärmt.

Danach wird noch 1 h bei Raumtemperatur weiter gerührt. Anschließend wird der überschüssige Oxalsäurediethylester am Rotationsverdampfer unter Vakuum (1 mbar) bei einer Badtemperatur von 90 °C abdestilliert. Man erhält eine hellbraune, klare Flüssigkeit.

### (Vergleichs-)Beispiel 4: Emulsion VE1 eines Amino-funktionalisierten Polydimethylsiloxans (nicht-erfindungsgemäß)

Mit einem Ultra-Turrax T 50 Emulgiergerät (Fa. Janke & Kunkel / IKA) werden bei 5000 U/min 1,6 g einer 80%-igen wässrigen Lösung von Isotridecyldecaethoxylat, käuflich erwerblich unter dem Handelsnamen Lutensol TO 10 (Fa. BASF), 5,8 g Isotridecylpentaethoxylat, käuflich erwerblich unter dem Handelsnamen Lutensol TO 5 (Fa. BASF), 2,5 g vollentsalztes Wasser und 0,3 g 80%-iger Essigsäure vorgemischt. In diese Vormischung werden 14,8 g eines bei 40 °C getemperten hydroxy/methoxyterminierten Copolymers aus 3-(2-Aminoethylamino)propylmethylsiloxy- und Dimethylsiloxyeinheiten mit einer Aminzahl von 0,30 mequ/g und einer Viskosität von 800-1800 mm²/s (25,0 °C; Kapillar-Nr. IIIc) in vier Portionen zugegeben und jeweils 2 Minuten bei einer Scherung von 5000 U/min eingearbeitet und homogenisiert. Es wird mit 70,0 g vollentsalztem Wasser portionsweise bei 4000 U/min zur gewünschten Emulsion langsam verdünnt. Nach Zugabe von 0,9 g 2-Phenoxyethanol, käuflich erwerblich unter dem Handelsnamen S&M Phenoxyethanol (Schülke and Mayr GmbH and CO KG), und 4,0 g Glycerin 86%-ig wird weitere 2 Minuten bei 4000 U/min homogenisiert.

Man erhält eine transparente bis opaleszierende, farblose, niederviskose Mikroemulsion mit einem Festgehalt von 27% und einem pH-Wert von 5,5. Die Emulsion bleibt auch bei Lagerung homogen und stabil.

### (Vergleichs-)Beispiel 5: Emulsion VE2 eines Amino-funktionalisierten Polydimethylsiloxans (nicht-erfindungsgemäß)

Mit Hilfe eines Dissolvers Typ LDV 1 der Firma PC Laborsystem bereitet man aus 6,5 g Isotridecylpentethoxylat, käuflich erwerblich unter dem Handelsnamen Lutensol TO 5 (Fa. BASF), 20,0 g eines Copolymers aus 3-(2-Aminoethylamino)propylmethylsiloxy- und Dimethylsiloxyeinheiten mit einer Aminzahl von 0,13 mequ/g und einer Viskosität von 3900 mm²/s (25,0 °C; Kapillar-Nr. IV), 2,9 g Glycerin, 0,12 g 80%-iger Essigsäure, 0,19 g N-Morpholinomethyltriethoxysilan und 70 g Wasser eine Emulsion VE2 einer Partikelgröße D(50) von 28 nm (bei einer Photonenzählrate von 286 kcps). In diese Emulsion werden 0,13 g 2-Phenoxyethanol, käuflich erwerblich unter dem Handelsnamen S&M Phenoxyethanol (Schülke and Mayr GmbH and CO KG) eingemischt.

### (Vergleichs-)Beispiel 6: Emulsion VE3 eines Amino-funktionalisierten Polydimethylsiloxans (nicht-erfindungsgemäß)

Mit einem Ultra-Turrax T 50 Emulgiergerät (Fa. Janke & Kunkel / IKA) werden bei 5000 U/min 6,0 g C11-15 Pareth-7 (ethoxylierter sekundärer Alkohol, 7 Ethylenoxid-Einheiten), käuflich erwerblich unter dem Handelsnamen Tergitol 15-S-7 (Fa. Dow) und 1,9 g heißes, vollentsalztes Wasser vorgemischt. In diese Vormischung werden 1,0 g Laurylethoxylat-9 (ethoxylierter primärer Alkohol, 9 Ethylenoxid-Einheiten), käuflich erwerblich unter dem Handelsnamen Sympatens AL/090 (Fa. KLK Kolb), 3,0 g geschmolzenes Isotridecyldodecaethoxylat, käuflich erwerblich unter dem Handelsnamen Lutensol TO 12 (Fa. BASF) und 1,9 g weiteres heißes, vollentsalztes Wasser eingewogen und für 2 Minuten bei 5000 U/min homogenisiert. Im Anschluss werden 2,3 g Glycerin 86%-ig zudosiert und weitere 2 Minuten bei 5000 U/min homogenisiert. In diese Mischung werden 20,0 g eines hydroxy/methoxy-terminierten Copolymers aus 3-(2-Aminoethylamino)propylmethylsiloxy- und DimethylsiloxyEinheiten mit einer Aminzahl von 0,25 mequ/g und einer Viskosität von 1500-2100 mm²/s (25,0 °C; Kapillar-Nr. IIIc) in drei Portionen zugegeben und jeweils 2 Minuten bei einer Scherung von 5000 U/min homogenisiert. Nach Zugabe von 0,9 g 2-Phenoxyethanol, käuflich erwerblich unter dem Handelsnamen S&M Phenoxyethanol (Schülke and Mayr GmbH and CO KG), und 0,4 g 80%-iger Essigsäure werden weitere 2 Minuten bei 5000 U/min homogenisiert. Es wird mit 62,6 g vollentsalztem Wasser portionsweise bei 4000 U/min zur gewünschten Emulsion langsam verdünnt.

Man erhält eine transparente bis opaleszierende, farblose, niederviskose, Mikroemulsion mit einem Festgehalt von 33% und einem pH Wert von 5,0.

### Beispiel 7: Emulsion E4 eines mit einem Oxalamidoester-terminiertem Polyethervernetzten Amino-funktionalisierten Polydimethylsiloxans

Mit einem Ultra-Turrax T 50 Emulgiergerät (Fa. Janke & Kunkel / IKA) werden bei 5000 U/min 99,26 g der Emulsion **VE1** mit 0,74 g Oxalamidoester-terminiertem Polyether **A** (~5 Gew.-% bezogen auf amino-funktionalisiertes Polydimethylsiloxan) innerhalb einer Minute homogenisiert. Man erhält eine transparente bis leicht trübe, farblose bis minimal gelbliche, niederviskose, Emulsion **E4** mit einem Festgehalt von 28% und einem pH-Wert von 5,0.

Durch Eindampfen der Emulsion wird nach einer Trocknungszeit von 1-3 Tagen bei 25 °C ein ausgeprägter, weißlicher, elastischer, weicher, auf Aluminium gut haftender, auf der Oberfläche nicht klebriger, Film erhalten.

### Beispiel 8: Emulsion E5 eines mit einem Oxalamidoester-terminiertem Polyethervernetzten Amino-funktionalisierten Polydimethylsiloxans

Mit einem Ultra-Turrax T 50 Emulgiergerät (Fa. Janke & Kunkel / IKA) werden bei 5000 U/min 99,70 g der Emulsion **VE1** mit 0,30 g Oxalamidoester-terminiertem Polyether **B** (~2 Gew.-% bezogen auf amino-funktionalisiertes Polydimethylsiloxan) innerhalb einer Minute homogenisiert. Man erhält eine transparente bis leicht trübe, farblose bis minimal gelbliche, niederviskose, Emulsion **E5** mit einem Festgehalt von 27% und einem pH-Wert von 5,0.

Durch Eindampfen der Emulsion wird nach einer Trocknungszeit von 1-3 Tagen bei 25 °C ein ausgeprägter, weißlicher, elastischer, weicher, auf Aluminium gut haftender, auf der Oberfläche nicht klebriger, Film erhalten.

### Beispiel 9: Emulsion E6 eines mit einem Oxalamidoester-terminiertem Polyethervernetzten Amino-funktionalisierten Polydimethylsiloxans

Mit einem Ultra-Turrax T 50 Emulgiergerät (Fa. Janke & Kunkel / IKA) werden bei 5000 U/min 98,52 g der Emulsion **VE1** mit 1,48 g Oxalamidoester-terminiertem Polyether **C** (~10 Gew.-% bezogen auf amino-funktionalisiertes Polydimethylsiloxan) innerhalb einer Minute homogenisiert. Man erhält eine trübe, farblose bis minimal gelbliche, niederviskose, Emulsion **E6** mit einem Festgehalt von 28% und einem pH-Wert von 5,0. Durch Eindampfen der Emulsion wird nach einer Trocknungszeit von 1-3 Tagen bei 25 °C ein weißlicher, elastischer, weicher, auf Aluminium gut haftender, auf der Oberfläche nicht klebriger, Film erhalten.

### Beispiel 10: Emulsion E7 eines mit einem Oxalamidoester-terminiertem Polyethervernetzten Amino-funktionalisierten Polydimethylsiloxans

Mit einem Ultra-Turrax T 50 Emulgiergerät (Fa. Janke & Kunkel / IKA) werden bei 5000 U/min 97,00 g der Emulsion **VE3** mit 3,00 g Oxalamidoester-terminiertem Polyether **A** (~15 Gew.-% bezogen auf amino-funktionalisiertes Polydimethylsiloxan) innerhalb einer Minute homogenisiert. Man erhält eine leicht trübe, minimal gelbliche, niederviskose, Emulsion **E7** mit einem Festgehalt von 35% und einem pH-Wert von 4,5.

Durch Eindampfen der Emulsion wird nach einer Trocknungszeit von 1-3 Tagen bei 25 °C ein weißlicher, elastischer, weicher, auf Aluminium gut haftender, auf der Oberfläche nicht klebriger, Film erhalten.

### Beispiel 11: Emulsion E8 eines mit einem Oxalamidoester-terminiertem Polyethervernetzten Amino-funktionalisierten Polydimethylsiloxans

Mit einem Ultra-Turrax T 50 Emulgiergerät (Fa. Janke & Kunkel / IKA) werden bei 5000 U/min 99,20 g der Emulsion **VE3** mit 0,80 g Oxalamidoester-terminiertem Polyether **B** (~4 Gew.-% bezogen auf amino-funktionalisiertes Polydimethylsiloxan) innerhalb einer Minute homogenisiert. Man erhält eine transparente, minimal gelbliche, niederviskose, Emulsion **E8** mit einem Festgehalt von 34% und einem pH-Wert von 4,5.

Durch Eindampfen der Emulsion wird nach einer Trocknungszeit von 1-3 Tagen bei 25 °C ein ausgeprägter, weißlicher, elastischer, weicher, auf Aluminium gut haftender, auf der Oberfläche nicht klebriger, Film erhalten.

### Beispiel 12: Emulsion E9 eines mit einem Oxalamidoester-terminiertem Polyethervernetzten Amino-funktionalisierten Polydimethylsiloxans

Mit einem Ultra-Turrax T 50 Emulgiergerät (Fa. Janke & Kunkel / IKA) werden bei 5000 U/min 96,00 g der Emulsion **VE3** mit 4,00 g Oxalamidoester-terminiertem Polyether **C** (~20 Gew.-% bezogen auf amino-funktionalisiertes Polydimethylsiloxan) innerhalb einer Minute homogenisiert. Man erhält eine trübe, minimal gelbliche, niederviskose, Emulsion **E9** mit einem Festgehalt von 36% und einem pH-Wert von 4,5.

Durch Eindampfen der Emulsion wird nach einer Trocknungszeit von 1-3 Tagen bei 25 °C ein weißlicher, elastischer, sehr weicher, auf Aluminium gut haftender, auf der Oberfläche nicht klebriger, Film erhalten.

### (Vergleichs-)Beispiel 13: Emulsion VE10 eines linearen Oxalamidoester-Polyether-verbrückten Polydimethylsiloxans

Emulsion **VE10** wird analog Beispiel 1 der WO 2019/114953 A1 hergestellt:
In einem 500 ml 3 Hals-Kolben mit Thermoelement, KPG-Rührer und Rückflusskühler wurden 100 g (20 mmol) eines linearen Oxamidoester-terminierten Silikonöls (5065 g/mol) vorgelegt. Bei 22 °C wurden unter Rühren innerhalb von 10 Minuten 3,74 g (20 mmol) TA 187 (= N¹-(3-(Dimethylamino)propyl)-N³,N³-dimethylpropane-1,3-diamine, käuflich erwerblich bei der Fa. SIGMA-ALDRICH, MERCK, Darmstadt, Deutschland) und anschließend 6,6 g (10 mmol) JEFFAMINE^{®} ED-600 (erhältlich von Huntsman Performance Products, Everslaan 45, B-3078 Everberg, Belgium) zugegeben. Anschließend wurde noch 30 Minuten nachgerührt. Danach wurde das Reaktionsprodukt bei 40 °C und einem Druck von 20 hPa vom entstandenen Alkohol befreit. Man erhielt 107 g eines opaquen, oligomeren Produktes.

21,2 g des erhaltenen Produkts werden in 4.7 g Diethylenglykolmonobutylether (erhältlich bei Sigma-Aldrich Chemie GmbH, Taufkirchen, Deutschland) und 4.1 g Tridecylalkoholethoxylat (erhältlich als LUTENSOL^{®} TO von BASF SE, Ludwigshafen) gemischt und anschließend mit 70,0 g Wasser langsam verdünnt und mit Essigsäure, 80%ig auf pH 4,5 eingestellt.

### Beispiel 14:

Die Bestimmung des Vernetzungsgrades erfolgte unter Verwendung folgender in Tabelle 1 beschriebener Emulsionen. Die Emulsionen wurden hierbei in Aluminiumschalen gegossen und die Erscheinung der Emulsionen nach dem Entfernen des Wassers bewertet.

**Tabelle 1: Vernetzungsversuche V1 bis V9**

| Emulsionen | Filmbildung |
|---|---|
| **V1** *) enthaltend **VE1** | nach 1 Tag: p, ö; kein Film |
| **V2** *) enthaltend **VE3** | nach 1 Tag: p, ö; kein Film |
| **V3** *) enthaltend **VE10** | nach 1 Tag: p, ö; kein Film |
| **V4** **) enthaltend **E4** | nach 1 Tag: e, w; Film |
| **V5** **) enthaltend **E5** | nach 1 Tag: e, w; Film |
| **V6** **) enthaltend **E6** | nach 1 Tag: av, p; beginnende Filmbildung |
| | nach 3 Tagen: e, w; Film |
| **V7** **) enthaltend **E7** | nach 1 Tag: g-e; Film |
| | nach 3 Tagen: e, w; Film |
| **V8** **) enthaltend **E8** | nach 1 Tag: g-e; Film |
| | nach 3 Tagen: e, w; Film |
| **V9** **) enthaltend **E9** | nach 1 Tag: p, kein Film |
| | nach 3 Tagen: av-g-e; beginnende Filmbildung |
| | nach 1 Woche: g-e; Film |

| | |
|---|---|
| Legende: av = anvernetzt; e = elastisch; g = gelig; ö = ölig; P = pastös; w = weich. *) nicht erfindungsgemäß; **) erfindungsgemäß | |

### Beispiel 15: Bestimmung des Knittererholungswinkels:

Die Anwendungstests bezüglich der Bestimmung des Knittererholungswinkels erfolgten unter Verwendung folgender in Tabelle 2 beschriebener wässriger Formulierungen. Die Menge an Polyoxysiloxan-haltigen Emulsionen ist so gewählt, dass der Polyoxysiloxan-Gehalt (mit Ausnahme des Blindwerts **F1**) stets gleich groß ist.

**Tabelle 2: Wässrige Formulierungen F1 bis F8**

| Formulierungen | Polyoxysiloxanhaltige Emulsion | Wasser |
|---|---|---|
| **F1** (Blindwert) | - | 100,0 g |
| **F2** *) | 10,8 g **VE2** | 89,2 g |
| **F3** **) | 10,8 g **E4** | 89,2 g |
| **F4** **) | 10,8 g **E5** | 89,2 g |
| **F5** **) | 10,8 g **E6** | 89,2 g |
| **F6** **) | 8,0 g **E7** | 92,0 g |
| **F7** **) | 8,0 g **E8** | 92,0 g |
| **F8** **) | 8,0 g **E9** | 92,0 g |

| | | |
|---|---|---|
| *) nicht erfindungsgemäß **) erfindungsgemäß | | |

Die (erfindungsgemäßen wie auch nicht erfindungsgemäßen) Formulierungen werden durch einfaches Mischen der Bestandteile hergestellt (mit Hilfe eines Rührwerks der Marke IKA Eurostar Power basic mit Flügelrührer).

Zur Beurteilung der gewünschten Effekte bzgl. des Knittererholungswinkels:
Aus einem Baumwolltestgewebe wfk 10 A (100% Baumwolle mit ca. 170 g/m² Flächengewicht) der Fa. wfk-Testgewebe, das zweimal mit einem handelsüblichen Pulvervollwaschmittel bei 90 °C ausgewaschen wurde, werden Textilstreifen 2 x 5cm entnommen.

Die wässrigen Formulierungen **F1** bis **F8** (siehe Tabelle 2) werden mittels eines Triggersprays auf die Textilstreifen aufgesprüht. Dabei wird die aufgesprühte Masse an Formulierungen **F1** bis **F8** so gewählt, dass sie gleich der Masse des Textilstreifens ist.

Die Textilstreifen werden über Nacht auf der Leine getrocknet, für 24 Stunden in einem Klimaraum bei 23°C / 60% Feuchtigkeit klimatisiert und anschließend mit einem Bügeleisen auf Stufe "Baumwolle" gebügelt.

Die Bestimmung des Knittererholungswinkels erfolgt nach der Methode DIN 53 890/1972:
Jeder Textilstreifen wird in Querrichtung umgefaltet, so dass die Länge des umzulegenden Probenschenkels 10 mm beträgt. Unter den umzulegenden Probenschenkel wird eine Aluminiumfolie von 0,15 mm Dicke gelegt, um ein Anhaften der Fasern zu verhindern. Die Probe wird mit einem Objektträger bedeckt und einem Gewichtstück von 1000 g so belastet, dass die Belastung nur auf dem umgelegten Probenschenkel ruht. Die Belastungsdauer beträgt 30 min.

Nach dem Abnehmen des Gewichtsstückes des Objektträgers wird der allmählich größer werdende Knittererholungswinkel nach Verlauf von 5 und 30 min an beiden Seiten des Winkelschenkels mit einem Winkelmesser bestimmt.

Pro Textil sind mindestens je 10 Proben vorzubereiten und zu vermessen. Die angegebenen Messergebnisse sind die Mittelwerte der jeweiligen Bestimmungen.

**Tabelle 3: Bestimmung des Knittererholungswinkels auf Baumwolltestgewebe wfk 10 A**

| Knittererholungswinkel nach Sprühapplikation und Trocknung | |
|---|---|
| Formulierungen | nach 5 min |
| **F1** (Blindwert) | 42,4° ± 1,7° |
| **F2** *) | 66,6° ± 2,4° |
| **F3** **) | 75,6° ± 2,9° |
| **F4** **) | 72,6° ± 2,0° |
| **F5** **) | 69, 0° ± 1,8° |
| **F6** **) | 70,4° ± 2,1° |
| **F7** **) | 69,8° ± 1,1° |
| **F8** **) | 80,8° ± 2,7° |

| | |
|---|---|
| *) enthält nicht-erfindungsgemäße Emulsion enthaltend ein unvernetztes Amino-funktionelles Polydiorganosiloxan **) enthält erfindungsgemäße Emulsion enthaltend ein vernetztes hydrophiles Polydiorganosiloxan | |

Die Ausrüstung der Textilien mit den Formulierungen **F3** bis **F8** enthaltend die erfindungsgemäßen Emulsionen **E4** bis **E9** führt zu einem deutlich erhöhten Knittererholungswinkel als ein nur mit Wasser besprühtes Textil (Blindwert **F1**).

Auch der Vergleich mit der Formulierung **F2,** die die nicht-erfindungsgemäße Emulsion **VE2** eines unvernetzten Amino-funktionalisierten Polydimethylsiloxans enthält, zeigt, dass die erfindungsgemäßen Formulierungen **F3** bis **F8,** insbesondere die Formulierungen **F3** und **F8,** einen erhöhten Knittererholungswinkel aufweisen.

Dadurch erreicht man bei der Verwendung der erfindungsgemäßen Emulsionen in Textilprodukten, deren Aufgabe die Reduktion bzw. Unterdrückung von Falten von Textilien, wie Kleidung ist, eine deutlich verringerte Knitterneigung als dies der Stand der Technik liefert.

### Beispiel 16: Tropfeneinsinkzeit

Die Anwendungstests bezüglich der Bestimmung der Tropfeneinsinkzeit erfolgten unter Verwendung der in Tabelle 2 (Beispiel 15) beschriebenen wässrigen Formulierungen **F2** bis **F5**.

Ein Baumwolltestgewebe wfk 10 A der Fa. wfk-Testgewebe wird entsprechend der Methode wie in Beispiel 15 beschrieben ausgerüstet.

Auf das derartig ausgerüstete Textil wurde nach Trocknung ein Tropfen entionisiertes Wasser aus einer Höhe von 4 cm auf die gespannte Stoffoberfläche gegeben und die Zeit bestimmt, nach der der Wassertropfen vom Stoff aufgesaugt war. Es wurden fünf Bestimmungen durchgeführt und der Mittelwert gebildet.

**Tabelle 4: Bestimmung der Tropfeneinsinkzeit auf Baumwolltestgewebe wfk 10 A**

| Tropfeneinsinkzeit auf Baumwolltestgewebe wfk 10 A nach Sprühapplikation und Trocknung | |
|---|---|
| Formulierungen | Einsinkzeit in Sekunden |
| **F2** (nicht-erfindungsgemäß) | 32 ± 2 |
| **F3** (erfindungsgemäß) | 14 ± 3 |
| **F4** (erfindungsgemäß) | 21 ± 3 |
| **F5** (erfindungsgemäß) | 17 ± 2 |

Die Ausrüstung des Baumwolltestgewebes mit den Formulierungen **F3** bis **F5** enthaltend die erfindungsgemäßen Emulsionen **E4** bis **E6** führt zu einer deutlich verringerten Tropfeneinsinkzeit auf Baumwolltestgewebe als die Ausrüstung mit der Formulierung **F2** enthaltend die nicht-erfindungsgemäße Emulsion **VE2** eines unvernetzten Amino-funktionalisierten Polydimethylsiloxans. Dadurch erreicht man bei dem Textil eine deutlich bessere Wasseraufnahme als der Stand der Technik.

### Beispiel 17: Weichgriff in der Anwendung als Weichspüler-Inhaltsstoff

Die Anwendungstests bzgl. der Bestimmung des Weichgriffs erfolgten unter Verwendung folgender in Tabelle 5 beschriebener wässriger Formulierungen.

**Tabelle 5: Wässrige Formulierungen F9 bis F13**

| Formulierungen | Polyoxysiloxanhaltige Emulsion | kationisches Tensid ***) | Wasser |
|---|---|---|---|
| **F9** *) | - | 4,0 g | 36,0 g |
| **F10** **) | 1,4 g **E4** | 2,4 g | 36,2 g |
| **F11** **) | 1,4 g **E5** | 2,40 g | 36,2 g |
| **F12** **) | 1,4 g **E6** | 2,40 g | 36,2 g |
| **F13** *) | 1,4 g **VE1** | 2,40 g | 36,2 g |

| | | | |
|---|---|---|---|
| *) nicht erfindungsgemäß **) erfindungsgemäß ***) N,N-bis[Ethyl(tallowate)]-N-(2-hydroxyethyl)-N-methylammoniummethylsulfate (90%-ige ethanolische Lösung), käuflich erwerblich unter dem Handelsnamen Stepantex^{®} VK90 (Fa. Stepan) | | | |

Zur Beurteilung der gewünschten Effekte bzgl. Weichgriff wurden jeweils sechs Frotteehandtücher aus Baumwollgewebe zusammen mit ca. 2 kg Ballaststoff in einer Haushaltswaschmaschine der Marke MIELE Softronic W 1935 WPS EcoLine mit dem Koch-/Buntwäscheprogramm bei 40 °C gewaschen und bei 1200 UpM geschleudert. Als Waschtensid wurden dabei 65 g eines Waschpulvers Testwaschmittel ECE-2 der Firma WFK dosiert. Nach dem Waschgang wird die Formulierung **F9** bis **F13** (vorverdünnt in 1 Liter Leitungswasser mit 16°dH) über das Spülfach hinzugefügt. Abschließend wurde die Ware mindestens 12 Stunden im Klimaraum bei 23 °C und 60% Luftfeuchtigkeit auf der Leine getrocknet.

### Bestimmung des Weichgriffs (Griffbewertung):

Da der Weichgriff von Textilien stark dem subjektiven Empfinden der Testpersonen unterliegt, kann nur eine Standardisierung der Randbedingungen, nicht aber der Bewertung erreicht werden. Um trotzdem eine Reproduzierbarkeit zu gewährleisten, wurden die ausgerüsteten Muster hinsichtlich ihres Weichgriffs beurteilt und in eine Rangfolge gebracht. Dazu wurden von 10 Personen in Abhängigkeit der Anzahl n der getesteten Muster 1 bis n Punkte vergeben, wobei n Punkte für das weichste Muster und 1 Punkt für das am wenigsten weich ausgerüstete Muster vergeben wurden. Das unausgerüstete Referenzmuster erhielt 0 Punkte. Die Griffbewertung eines Musters errechnet sich somit als Mittelwert der jeweils auf dieses Muster entfallenen Punkte.

**Tabelle 6: Weichgriffbeurteilung auf Frottierware**

| Weichgriffbeurteilung auf Frottierware (Flächengewicht: 500 g/m²) nach Waschmaschinenbehandlung und Trocknung | |
|---|---|
| Formulierungen | Weichgriff |
| **F9** (nicht erfindungsgemäß) | +++ |
| **F10** (erfindungsgemäß) | ++ |
| **F11** (erfindungsgemäß) | ++ |
| **F12** (erfindungsgemäß) | +++ |
| **F13** (nicht erfindungsgemäß) | + |
| +++ exzellent weich, ++ sehr weich, + weich, o hart | |

Die Ausrüstung des Textils mit den erfindungsgemäßen Formulierungen **F10** bis **F12** führt zu einem deutlich verbesserten Weichgriff gegenüber der Formulierung **F13** gemäß Stand der Technik (enthaltend Emulsion **VE1** eines unvernetzten Amino-funktionalisierten Diorganopolysiloxans), die einen geringeren Weichgriff aufweist.

Die Kombination aus kationischem Tensid und insbesondere der erfindungsgemäßen Emulsion in Formulierung **F12** führt ferner zu einem Weichgriff, der sonst nur mit deutlich erhöhtem Gehalt an kationischem Tensid wie in Formulierung **F9** erreicht werden kann. Dies führt zu einem geringeren Einsatz an Rohstoffen, was ökologisch wie auch ökonomisch eine deutliche Verbesserung des Stands der Technik darstellt.

## Patentansprüche

1. Wässrige Dispersionen enthaltend
(1) vorvernetzte Organopolysiloxane, die Einheiten der Formel
R₂SiO_{2/2} (I),
und durchschnittlich mindestens eine Struktureinheit der Formel
SiR¹O_{2/2}-Y-SiR¹O_{2/2} (III)
enthalten, wobei
Y einen zweiwertigen Rest der Formel
-R²-[NR³⁻R⁴⁻]ₙNR³-C(O)-C(O)-NR³-Z-NR³-C(O)-C(O)-NR³-[R⁴-NR³-]ₙR²-
bedeutet,
Z gleich oder verschieden ist und einen zweiwertigen eine Polyoxyalkylengruppe enthaltenden organischen Rest, vorzugsweise einen Rest der Formel -(R⁵O)ₘ-R⁶-, bedeutet,
R gleich oder verschieden sein kann, einen einwertigen, unsubstituierten oder substituierten, gesättigten oder ungesättigten Kohlenwasserstoffrest mit 1 bis 18 Kohlenstoffatomen bedeutet,
R¹ gleich oder verschieden sein kann und einen Rest R oder einen Rest -O-R⁷ bedeutet,
R² einen SiC-gebundenen, zweiwertigen linearen oder verzweigten Kohlenwasserstoffrest mit 1 bis 18 Kohlenstoffatomen bedeutet,
R³ ein Wasserstoffatom, einen Alkylrest mit 1 bis 8 Kohlenstoffatomen oder einen Acylrest bedeutet,
R⁴ einen zweiwertigen Kohlenwasserstoffrest mit 1 bis 6 Kohlenstoffatomen bedeutet,
R⁵ gleich oder unterschiedlich ist und einen C₁-C₁₀-Alkylenrest bedeutet,
R⁶ einen C₁-C₁₀-Alkylenrest bedeutet,
R⁷ gleich oder verschieden sein kann, Wasserstoff oder einen einwertigen Kohlenwasserstoffrest mit 1 bis 18 Kohlenstoffatomen, der durch ein oder mehrere separate Sauerstoffatome unterbrochen sein kann, bedeutet,
n 0, 1, 2, 3 oder 4 ist und
m eine ganze Zahl und durchschnittlich 1 bis 80 ist,
(2) Emulgatoren,
und
(3) Wasser.

2. Wässrige Dispersionen nach Anspruch 1, **dadurch gekennzeichnet, dass** die vorvernetzten Organopolysiloxane (1) Struktureinheiten der Formel
R¹ASiO_{2/2} (II)
enthalten, wobei
A gleich oder verschieden sein kann und einen Rest der Formel
-R²-[NR³-R⁴-]ₙNR³₂
bedeutet, wobei
R¹ die in Anspruch 1 dafür angegebene Bedeutung hat,
R² einen SiC-gebundenen, zweiwertigen linearen oder verzweigten Kohlenwasserstoffrest mit 1 bis 18 Kohlenstoffatomen bedeutet,
R³ ein Wasserstoffatom, einen Alkylrest mit 1 bis 8 Kohlenstoffatomen oder einen Acylrest bedeutet,
R⁴ einen zweiwertigen Kohlenwasserstoffrest mit 1 bis 6 Kohlenstoffatomen bedeutet und
n gleich 0, 1, 2, 3 oder 4 ist.

3. Wässrige Dispersionen nach Anspruch 1 oder 2, **dadurch gekennzeichnet, dass** die vorvernetzten Organopolysiloxane (1) solche ausgewählt aus der Gruppe der Formeln 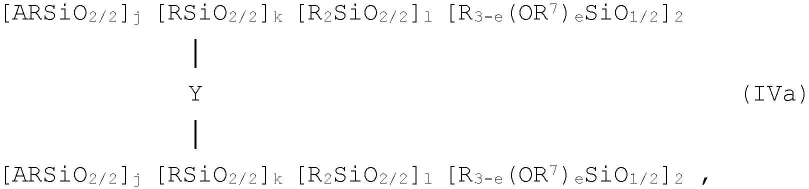 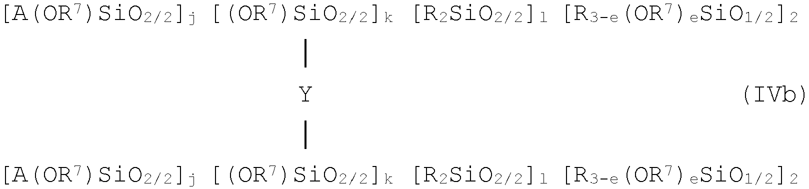 und deren Mischungen sind, wobei
R, R⁷ und Y die im Anspruch 1 dafür angegebene Bedeutung haben,
A die im Anspruch 2 dafür angegebene Bedeutung hat,
e gleich 0 oder 1 ist,
j gleich 0 oder eine ganze Zahl zwischen 1 und 15 ist,
k mindestens 1 und höchstens 15 ist und
l mindestens 40 und höchstens 1000 ist.

4. Wässerige Dispersionen nach Anspruch 1, 2 oder 3, **dadurch gekennzeichnet, dass** die vorvernetzten Organopolysiloxane nach dem Entfernen des Wassers elastomere Filme bilden.

5. Vorvernetzte Organopolysiloxane (1), die Einheiten der Formel
R₂SiO_{2/2} (I),
und durchschnittlich mindestens eine Struktureinheit der Formel
SiR¹O_{2/2}-Y-SiR¹O_{2/2} (III)
enthalten, wobei
Y einen zweiwertigen Rest der Formel
-R²-[NR³-R⁴-]n^{N}R³₋C(O)-C(O)-NR³-Z-NR³-C(O)-C(O)-NR³-[R⁴-NR³]ₙ-R²-
bedeutet,
Z gleich oder verschieden ist und einen zweiwertigen eine Polyoxyalkylengruppe enthaltenden organischen Rest, vorzugsweise einen Rest der Formel -(R⁵O)ₘ-R⁶-, bedeutet,
R gleich oder verschieden sein kann, einen einwertigen, unsubstituierten oder substituierten, gesättigten oder ungesättigten Kohlenwasserstoffrest mit 1 bis 18 Kohlenstoffatomen bedeutet,
R¹ gleich oder verschieden sein kann und einen Rest R oder einen Rest -O-R⁷ bedeutet,
R² einen SiC-gebundenen, zweiwertigen linearen oder verzweigten Kohlenwasserstoffrest mit 3 bis 18 Kohlenstoffatomen bedeutet,
R³ ein Wasserstoffatom, einen Alkylrest mit 1 bis 8 Kohlenstoffatomen oder einen Acylrest bedeutet ist,
R⁴ einen zweiwertigen Kohlenwasserstoffrest mit 1 bis 6 Kohlenstoffatomen bedeutet,
R⁵ gleich oder unterschiedlich ist und einen C₁-C₁₀-Alkylenrest,
R⁶ einen C₁-C₁₀-Alkylenrest bedeutet,
R⁷ gleich oder verschieden sein kann, Wasserstoff oder einen einwertigen Kohlenwasserstoffrest mit 1 bis 18 Kohlenstoffatomen, der durch ein oder mehrere separate Sauerstoffatome unterbrochen sein kann, bedeutet,
n gleich 0, 1, 2, 3 oder 4 ist und
m eine ganze Zahl und durchschnittlich 1 bis 80 ist.

6. Verfahren zur Herstellung der wässrigen Dispersionen von vorvernetzten Organopolysiloxane (1), **dadurch gekennzeichnet, dass** Organopolysiloxane (4), die Einheiten der Formel
R₂SiO_{2/2} (I),
und durchschnittlich mindestens eine Struktureinheit der Formel
R¹ASiO_{2/2} (II)
enthalten, wobei
R und R¹ die in Anspruch 1 dafür angegebene Bedeutung haben,
A die in Anspruch 2 dafür angegebene Bedeutung hat,
mit Oxalamidoester-terminierten Polyethern (5) der Formel (V) 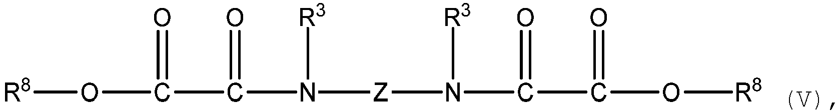
wobei
Z und R³ die in Anspruch 1 dafür angegebene Bedeutung haben,
R⁸ gleich oder unterschiedlich ist und einen einwertigen Kohlenwasserstoffrest mit 1 bis 18 Kohlenstoffatomen, der durch ein oder mehrere separate Sauerstoffatome unterbrochen sein kann, bedeutet,
in Gegenwart von Emulgatoren (2) und Wasser (3) umgesetzt werden.

7. Verfahren nach Anspruch 6, **dadurch gekennzeichnet, dass** als Organopolysiloxane (4) solche ausgewählt aus der Gruppe der Formeln
[ARSiO_{2/2}]ⱼ[R₂SiO_{2/2}]ₗ[R₃₋ₑ(OR⁷)ₑSiO_{1/2}]₂ (VIa),
[A(OR¹)SiO_{2/2}]ⱼ[R₂SiO_{2/2}]ₗ[R₃₋ₑ(OR⁷)ₑSiO_{1/2}]₂ (VIb),
und deren Mischungen eingesetzt werden,
wobei R, R¹ und R⁷ die in Anspruch 1 dafür angegebene Bedeutung haben,
A die in Anspruch 2 dafür angegebene Bedeutung hat und j, l und e die in Anspruch 3 dafür angegebene Bedeutung haben.

8. Zusammensetzungen zur Behandlung von Substraten, vorzugsweise faserigen Substraten, enthaltend erfindungsgemäße wässrige Dispersionen von vorvernetzten Organopolysiloxanen (1) nach Anspruch 1, 2 oder 3 oder hergestellt nach Anspruch 6 oder 7 oder erfindungsgemäße vorvernetzte Organopolysiloxane (1) nach Anspruch 5.

9. Zusammensetzungen nach Anspruch 8, **dadurch gekennzeichnet, dass** die faserigen Substrate Textilien sind.

10. Verwendung der Zusammensetzungen nach Anspruch 8 oder 9 zur Behandlung von Substraten, vorzugsweise zur Behandlung von faserigen Substraten.

11. Verwendung nach Anspruch 10, **dadurch gekennzeichnet, dass** die Zusammensetzungen zur Reinigung und Pflege von Substraten, vorzugsweise zur Reinigung und Pflege von faserigen Substraten, eingesetzt werden.

12. Verwendung nach Anspruch 10 oder 11, **dadurch gekennzeichnet, dass** die faserigen Substrate Textilien sind.

## Claims

1. Aqueous dispersions comprising
(1) precrosslinked organopolysiloxanes which comprise units of the formula
R₂SiO_{2/2} (I),
and on average at least one structural unit of the formula
SiR¹O_{2/2}-Y-SiR¹O_{2/2} (III)
where
Y is a divalent radical of the formula
-R²-[NR³-R⁴-]NR³-C(O)-C(O)-NR³-Z-NR³-C(O)-C(O)-NR³-[R⁴- NR³-]ₙR²-,
Z is identical or different and is a divalent organic radical containing a polyoxyalkylene group, preferably a radical of the formula -(R⁵O)ₘ-R⁶-,
R may be identical or different and is a monovalent, unsubstituted or substituted, saturated or unsaturated hydrocarbon radical having 1 to 18 carbon atoms,
R¹ may be identical or different and is a radical R or a radical -O-R⁷,
R² is an SiC-bonded, divalent linear or branched hydrocarbon radical having 1 to 18 carbon atoms,
R³ is a hydrogen atom, an alkyl radical having 1 to 8 carbon atoms or an acyl radical,
R⁴ is a divalent hydrocarbon radical having 1 to 6 carbon atoms,
R⁵ is identical or different and is a C₁-C₁₀alkylene radical,
R⁶ is a C₁-C₁₀alkylene radical,
R⁷ may be identical or different and is hydrogen or a monovalent hydrocarbon radical which has 1 to 18 carbon atoms and may be interrupted by one or more separate oxygen atoms,
n is 0, 1, 2, 3 or 4 and
m is an integer and is on average 1 to 80,
(2) emulsifiers,
and
(3) water.

2. Aqueous dispersions according to Claim 1, **characterized in that** the precrosslinked organopolysiloxanes (1) comprise structural units of the formula
R¹ASiO_{2/2} (II)
where
A may be identical or different and is a radical of the formula
-R²-[NR³-R⁴-]ₙNR³₂
where
R¹ has the meaning indicated for it in Claim 1,
R² is an SiC-bonded, divalent linear or branched hydrocarbon radical having 1 to 18 carbon atoms,
R³ is a hydrogen atom, an alkyl radical having 1 to 8 carbon atoms or an acyl radical,
R⁴ is a divalent hydrocarbon radical having 1 to 6 carbon atoms, and
n is 0, 1, 2, 3 or 4.

3. Aqueous dispersions according to Claim 1 or 2, **characterized in that** the precrosslinked organopolysiloxanes (1) are selected from the group of the formulae 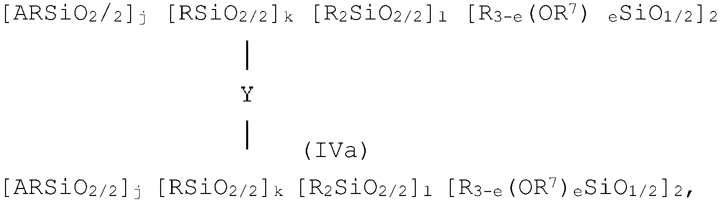 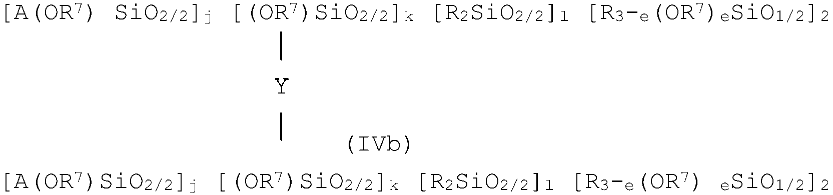 and mixtures thereof, where
R, R⁷ and Y have the meaning indicated for them in Claim 1,
A has the meaning indicated for it in Claim 2,
e is 0 or 1,
j is 0 or an integer between 1 and 15,
k is at least 1 and at most 15; and
l is at least 40 and at most 1000.

4. Aqueous dispersions according to Claim 1, 2 or 3, **characterized in that** following removal of the water, the precrosslinked organopolysiloxanes form elastomeric films.

5. Precrosslinked organopolysiloxanes (1) which comprise units of the formula R₂SiO_{2/2} (I),
and on average at least one structural unit of the formula
SiR¹O_{2/2}-Y-SiR¹O_{2/2} (III)
where
Y is a divalent radical of the formula
-R²-[NR³-R⁴-]NR³-C(O)-C(O)-NR³-Z-NR³-C(O)-C(O)-NR³-[R⁴- NR³]ₙ-R²-
Z is identical or different and is a divalent organic radical containing a polyoxyalkylene group, preferably a radical of the formula -(R⁵O)ₘ-R⁶-,
R may be identical or different and is a monovalent, unsubstituted or substituted, saturated or unsaturated hydrocarbon radical having 1 to 18 carbon atoms,
R¹ may be identical or different and is a radical R or a radical -O-R⁷,
R² is an SiC-bonded, divalent linear or branched hydrocarbon radical having 3 to 18 carbon atoms,
R³ is a hydrogen atom, an alkyl radical having 1 to 8 carbon atoms or an acyl radical,
R⁴ is a divalent hydrocarbon radical having 1 to 6 carbon atoms,
R⁵ is identical or different and is a C₁-C₁₀alkylene radical,
R⁶ is a C₁-C₁₀alkylene radical,
R⁷ may be identical or different and is hydrogen or a monovalent hydrocarbon radical which has 1 to 18 carbon atoms and may be interrupted by one or more separate oxygen atoms,
n is 0, 1, 2, 3 or 4, and
m is an integer and is on average 1 to 80.

6. Process for producing the aqueous dispersions of precrosslinked organopolysiloxanes (1), **characterized in that** organopolysiloxanes (4) which comprise units of the formula
R₂SiO_{2/2} (I),
and on average at least one structural unit of the formula
R¹ASiO_{2/2} (II)
where
R and R¹ have the meaning indicated for them in Claim 1, A has the meaning indicated for it in Claim 2 are reacted with oxalamidoester-terminated polyethers (5) of the formula (V) 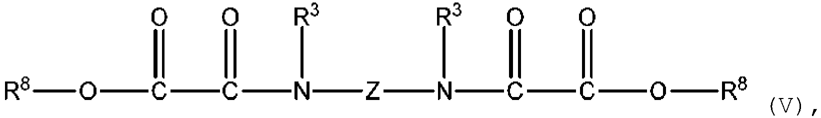
where
Z and R³ have the meaning indicated for them in Claim 1, R⁸ is identical or different and is a monovalent hydrocarbon radical having 1 to 18 carbon atoms,
which may be interrupted by one or more separate oxygen atoms,
in the presence of emulsifiers (2) and water (3).

7. Process according to Claim 6, **characterized in that** organopolysiloxanes (4) used comprise those selected from the group of the formulae
[ARSiO_{2/2}]ⱼ[R₂SiO_{2/2}]ₗ[R₃₋ₑ(OR⁷)ₑSiO_{1/2}]₂ (VIa),
[A (OR¹)SiO_{2/2}]ⱼ[R₂SiO_{2/2}]ₗ[R₃₋ₑ(OR⁷)ₑSiO_{1/2}]₂ (VIb),
and mixtures thereof,
where R, R¹ and R⁷ have the meaning indicated for them in Claim 1,
A has the meaning indicated for it in Claim 2, and j, l and e have the meaning indicated for them in Claim 3.

8. Compositions for treating substrates, preferably fibrous substrates, comprising aqueous dispersions of precrosslinked organopolysiloxanes (1) according to the invention according to Claim 1, 2 or 3 or produced according to Claim 6 or 7, or precrosslinked organopolysiloxanes (1) according to the invention according to Claim 5.

9. Compositions according to Claim 8, **characterized in that** the fibrous substrates are textiles.

10. Use of the compositions according to Claim 8 or 9 for treating substrates, preferably for treating fibrous substrates.

11. Use according to Claim 10, **characterized in that** the compositions are used for cleaning and caring for substrates, preferably for cleaning and caring for fibrous substrates.

12. Use according to Claim 10 or 11, **characterized in that** the fibrous substrates are textiles.

## Revendications

1. Dispersions aqueuses contenant
(1) des organopolysiloxanes préréticulés, qui contiennent des motifs de formule
R₂SiO_{2/2} (I),
et en moyenne au moins un motif structural de formule
SiR¹O_{2/2}-Y-SiR¹O_{2/2} (III)
dans lesquelles
Y signifie radical bivalent de formule
-R²-[NR³-R⁴-]ₙNR³-C(O)-C(O)-NR³-Z-NR³-C(O)-C(O)-NR³-[R⁴- NR³-]ₙR²-
,
Z est identique ou différent et signifie un radical organique bivalent contenant un groupe polyoxyalkylène, de préférence un radical de formule - (R⁵O)ₘ-R⁶-,
R peut être identique ou différent et signifie un radical hydrocarboné monovalent, non substitué ou substitué, saturé ou insaturé comprenant 1 à 18 atomes de carbone,
R¹ peut être identique ou différent et signifie un radical R ou un radical -O-R⁷,
R² signifie un radical hydrocarboné lié par SiC, bivalent, linéaire ou ramifié, comprenant 1 à 18 atomes de carbone,
R³ signifie un atome d'hydrogène, un radical alkyle comprenant 1 à 8 atomes de carbone ou un radical acyle,
R⁴ signifie un radical hydrocarboné bivalent comprenant 1 à 6 atomes de carbone,
R⁵ est identique ou différent et signifie un radical C₁-C₁₀-alkylène,
R⁶ signifie un radical C₁-C₁₀-alkylène,
R⁷ peut être identique ou différent et signifie hydrogène ou un radical hydrocarboné monovalent comprenant 1 à 18 atomes de carbone, qui peut être interrompu par un ou plusieurs atomes d'oxygène séparés,
n vaut 0, 1, 2, 3 ou 4 et
m est un nombre entier et vaut en moyenne 1 à 80,
(2) des émulsifiants,
et
(3) de l'eau.

2. Dispersions aqueuses selon la revendication 1, **caractérisées en ce que** les organopolysiloxanes préréticulés (1) contiennent des motifs structuraux de formule
R¹ASiO_{2/2} (II)
dans laquelle
A peut être identique ou différent et signifie un radical de formule
-R²-[NR³-R⁴-]ₙNR³₂
dans laquelle
R¹ présente la signification indiquée dans la revendication 1 pour ce radical,
R² signifie un radical hydrocarboné lié par SiC, bivalent, linéaire ou ramifié, comprenant 1 à 18 atomes de carbone,
R³ signifie un atome d'hydrogène, un radical alkyle comprenant 1 à 8 atomes de carbone ou un radical acyle,
R⁴ signifie un radical hydrocarboné bivalent comprenant 1 à 6 atomes de carbone et
n vaut 0, 1, 2, 3 ou 4.

3. Dispersions aqueuses selon la revendication 1 ou 2, **caractérisées en ce que** les organopolysiloxanes préréticulés (1) sont ceux choisis dans le groupe des formules 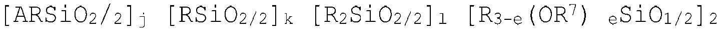 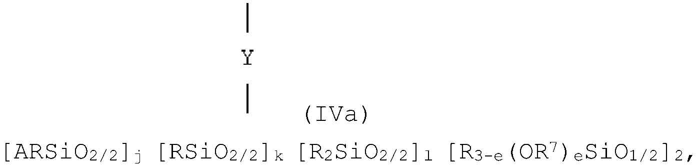 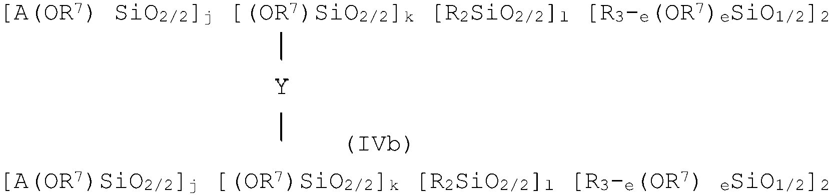 et leurs mélanges,
R, R⁷ et Y présentant la signification indiquée dans la revendication 1 pour ces radicaux,
A présentant la signification indiquée dans la revendication 2 pour ce radical,
e vaut 0 ou 1,
j vaut 0 ou un nombre entier entre 1 et 15,
k vaut au moins 1 et au plus 15 et
l vaut au moins 40 et au plus 1000.

4. Dispersions aqueuses selon la revendication 1, 2 ou 3, **caractérisées en ce que** les organopolysiloxanes préréticulés forment, après l'élimination de l'eau, des films élastomères.

5. Organopolysiloxanes préréticulés (1), qui contiennent des motifs de formule
R₂SiO_{2/2} (I),
et en moyenne au moins un motif structural de formule
SiR¹O_{2/2}-Y-SiR¹O_{2/2} (III)
dans lesquelles
Y signifie radical bivalent de formule
-R²-[NR³-R⁴-]ₙNR³-C(O)-C(O)-NR³-Z-NR³-C(O)-C(O)-NR³-[R⁴- NR³]ₙ-R²-,
Z est identique ou différent et signifie un radical organique bivalent contenant un groupe polyoxyalkylène, de préférence un radical de formule -(R⁵O)ₘ-R⁶-,
R peut être identique ou différent et signifie un radical hydrocarboné monovalent, non substitué ou substitué, saturé ou insaturé comprenant 1 à 18 atomes de carbone,
R¹ peut être identique ou différent et signifie un radical R ou un radical -O-R⁷,
R² signifie un radical hydrocarboné lié par SiC, bivalent, linéaire ou ramifié, comprenant 3 à 18 atomes de carbone,
R³ signifie un atome d'hydrogène, un radical alkyle comprenant 1 à 8 atomes de carbone ou un radical acyle,
R⁴ signifie un radical hydrocarboné bivalent comprenant 1 à 6 atomes de carbone,
R⁵ est identique ou différent et signifie un radical C₁-C₁₀-alkylène,
R⁶ signifie un radical C₁-C₁₀-alkylène,
R⁷ peut être identique ou différent et signifie hydrogène ou un radical hydrocarboné monovalent comprenant 1 à 18 atomes de carbone, qui peut être interrompu par un ou plusieurs atomes d'oxygène séparés,
n vaut 0, 1, 2, 3 ou 4 et
m est un nombre entier et vaut en moyenne 1 à 80.

6. Procédé de préparation des dispersions aqueuses d'organopolysiloxanes préréticulés (1), **caractérisé en ce que** des organopolysiloxanes (4), qui contiennent des motifs de formule
R₂SiO_{2/2} (I),
et en moyenne au moins un motif structural de formule
R¹ASiO_{2/2} (II)
dans lesquelles
R et R¹ présentent la signification indiquée dans la revendication 1 pour ces radicaux,
A présente la signification indiquée dans la revendication 2 pour ce radical, sont transformés avec des polyéthers terminés par oxalamidoester (5) de formule (V) 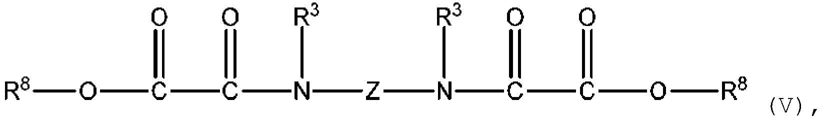
dans laquelle
Z et R³ présentent la signification indiquée dans la revendication 1 pour ces radicaux,
R⁸ est identique ou différent et signifie un radical hydrocarboné monovalent, comprenant 1 à 18 atomes de carbone,
qui peut être interrompu par un ou plusieurs atomes d'oxygène séparés,
en présence d'émulsifiants (2) et d'eau (3).

7. Procédé selon la revendication 6, **caractérisé en ce qu'**on utilise, comme organopolysiloxanes (4), ceux choisis dans le groupe des formules
[ARSiO_{2/2}]ⱼ[R₂SiO_{2/2}]ₗ[R₃₋ₑ(OR⁷)ₑSiO_{1/2}]₂ (VIa),
[A(OR¹)SiO_{2/2}]ⱼ[R₂SiO_{2/2}]ₗ[R₃₋ₑ(OR⁷)ₑSiO_{1/2}]₂ (VIb),
et leurs mélanges,
R, R¹ et R⁷ présentant la signification indiquée dans la revendication 1 pour ces radicaux,
A présentant la signification indiquée dans la revendication 2 pour ce radical et j, 1 et e présentant la signification indiquée dans la revendication 3 pour ces éléments.

8. Compositions pour le traitement de substrats, de préférence de substrats fibreux, contenant des dispersions aqueuses selon l'invention d'organopolysiloxanes préréticulés (1) selon la revendication 1, 2 ou 3 ou préparés selon la revendication 6 ou 7 ou des organopolysiloxanes préréticulés (1) selon l'invention selon la revendication 5.

9. Compositions selon la revendication 8, **caractérisées en ce que** les substrats fibreux sont des textiles.

10. Utilisation des compositions selon le revendication 8 ou 9 pour le traitement de substrats, de préférence pour le traitement de substrats fibreux.

11. Utilisation selon la revendication 10, **caractérisée en ce que** les compositions sont utilisées pour le nettoyage et l'entretien de substrats, de préférence pour le nettoyage et l'entretien de substrats fibreux.

12. Utilisation selon la revendication 10 ou 11, **caractérisée en ce que** les substrats fibreux sont des textiles.
